# EUROPÄISCHE PATENTSCHRIFT

(11) **EP 4 010 726 B1**
(45) Veröffentlichungstag und Bekanntmachung des Hinweises auf die Patenterteilung: **24.04.2024**
(21) Anmeldenummer: 20753735.8
(22) Anmeldetag: 06.08.2020
(51) Int. Cl.: G01S 5/16, G05D 1/02

(54) **VORRICHTUNG, VERFAHREN ZUM STEUERN DERSELBEN UND VORRICHTUNGSVERBUND BZW. SCHWARM**
DEVICE, METHOD FOR CONTROLLING THE SAME AND DEVICE COMBINATION OR SWARM
DISPOSITIF, PROCÉDÉ DE CONTRÔLE DE LA MÊME ET ASSOCIATION DE DISPOSITIFS OU ESSAIM

(30) Priorität: 09.08.2019 DE 102019211984
(43) Veröffentlichungstag der Anmeldung: 15.06.2022
(73) Patentinhaber: Fraunhofer-Gesellschaft zur Förderung der angewandten Forschung e.V., 80686 München (DE)
(72) Erfinder: BEHLING, Jan, 44227 Dortmund (DE); ROTGERI, Mathias, 44227 Dortmund (DE); EMMERICH, Jan Sören, 44227 Dortmund (DE); HÖNING, Dirk, 44227 Dortmund (DE); KLOKOWSKI, Patrick, 44227 Dortmund (DE); HAMMERMEISTER, Christian, 44227 Dortmund (DE); TEN HOMPEL, Michael, 44227 Dortmund (DE)
(74) Vertreter: König, Andreas Rudolf
(86) Internationale Anmeldenummer: PCT/EP2020/072174
(87) Internationale Veröffentlichungsnummer: WO 2021/028317

(56) Entgegenhaltungen:
- EP-A1- 3 153 940
- WO-A1-2018/041408
- US-A1- 2007 069 026

## Beschreibung

Die vorliegende Erfindung bezieht sich auf eine Vorrichtung, die eine eigene relative Lokalisierung zu umliegenden Objekten bestimmen kann und eine Antriebseinrichtung zur eigenen Fortbewegung basierend hierauf steuert. Die vorliegende Erfindung bezieht sich ferner auf einen Vorrichtungsverbund oder Schwarm mit einer Mehrzahl derartiger Vorrichtungen, auf ein Verfahren zum Steuern einer Vorrichtung sowie auf ein Computerprogramm. Die vorliegende Erfindung bezieht sich darüber hinaus auf die Erkennung von anderen Teilnehmern und deren Ausrichtung über seitliche Muster an Transportfahrzeugen.

Beim Einsatz mehrerer mobiler Roboter, die miteinander oder mit anderer interaktionsfähiger Infrastruktur in Kooperation stehen, stellt sich das Problem der eindeutigen Erkennung und Identifikation der umliegenden Interaktionspartner. Bei komplexeren Abläufen müssen nicht bloß die anderen Teilnehmer erkannt werden, es können auch andere Anforderungen bestehen, etwa die Erkennung deren Ausrichtung im Raum, um beispielsweise Andock-Vorgänge zur Lastübergabe zwischen zwei Robotern zu ermöglichen oder bei Fahrmanövern mit mehreren Fahrzeugen, die Fahrtrichtung der anderen Teilnehmer deuten zu können. In hoch-dynamischen Systemen soll diese Erkennung zusätzlich möglichst schnell erfolgen und auf der vorhandenen Hardware nicht zu viele Ressourcen (CPU/GPU-)Leistung in Anspruch nehmen.

Bekannte Lösungen sind primär von der Art des verwendeten Roboter-Schwarms abhängig. Bei Systemen mit einer zentralen Lokalisierung, bei der ein Server alle Teilnehmer koordiniert, können allen Robotern die Positionen der umliegenden Fahrzeuge über die reguläre Funk-Kommunikation mitgeteilt werden. Bei verteilten Systemen können Fahrzeuge ein Mesh-Netzwerk zur Kommunikation aufspannen, über welches sie den umliegenden Teilnehmern ihre aktuelle Position mitteilen können. Für Andock-Vorgänge an Stationen oder Ähnliches werden zum Teil sogenannte "Landmarken" verwendet oder Barcodes/QR-Codes, welche von einem Scanner erkannt werden können.

EP 3 153 940 A1 beschreibt ein Verfahren und eine Steuerungsvorrichtung zur Steuerung eines Fahrzeugs , welches mit einem optischen Bildverarbeitungssystem ausgestattet ist. Es besteht ein Bedarf an Vorrichtungen, Verfahren zum Steuern derselben und an Vorrichtungsverbünden, die eine zuverlässige relative Lokalisierung der Vorrichtung bezüglich eines Objekts ermöglichen.

Eine Aufgabe der vorliegenden Erfindung besteht deshalb darin, Vorrichtungen, Verfahren und Vorrichtungsverbünde zu schaffen, die eine zuverlässige relative Lokalisierung der Vorrichtung bezüglich eines Objekts ermitteln.

Diese Aufgabe wird durch den Gegenstand der unabhängigen Patentansprüche gelößt. Die Erfindung wird durch nachfolgende Ausführungsbeispiele erläutert, die nicht unbedingt, wenn nicht anders angegeben, Teil der Erfindung sein müssen.

Ein Kerngedanke der vorliegenden Erfindung besteht darin, ein zweidimensionales Muster an Objekten anzubringen und durch Auswertung des zweidimensionalen Musters zumindest im Hinblick auf einen ersten und einen zweiten Markierungsbereich innerhalb des Musters die relative Lokalisierung der Vorrichtung bezüglich des Objekts zu ermitteln. Dadurch kann eine Vorrichtung, die die relative Lokalisierung für sich selbst bestimmt hat, eine Antriebseinrichtung steuern, um sich selbst fortzubewegen.

Gemäß einem Ausführungsbeispiel der Erfindung umfasst eine Vorrichtung eine optische Erfassungseinrichtung, die ausgebildet ist, um ein Objekt zu erfassen, um eine Aufnahme des Objekts zu erhalten. Die Vorrichtung umfasst eine Antriebseinrichtung, die ausgebildet ist, um die Vorrichtung anzutreiben und zu bewegen. Die Vorrichtung umfasst eine Auswerteeinrichtung, die ausgebildet ist, um die Aufnahme auf ein zumindest zweidimensionales Muster hin auszuwerten und um das Muster bezüglich zumindest eines ersten Markierungsbereichs und eines zweiten Markierungsbereichs auszuwerten. Die Auswerteeinrichtung ist ausgebildet, um durch Vergleich des ersten Markierungsbereichs und des zweiten Markierungsbereichs ein Markierungsergebnis zu erhalten, und um basierend auf dem Markierungsergebnis eine relative Lokalisierung der Vorrichtung bezüglich des Objekts zu ermitteln. Die Vorrichtung umfasst ferner eine Steuerungseinrichtung, die ausgebildet ist, um die Antriebseinrichtung basierend auf der relativen Lokalisierung zu steuern. Dies ermöglicht die relative Lokalisierung der Vorrichtung bezüglich umgebender Objekte anhand der erkannten Muster und somit eine robuste und präzise Steuerung der Antriebseinrichtung. Die Antriebseinrichtung ist ausgebildet, um die Vorrichtung entlang einer Bewegungsrichtung zu bewegen; wobei die optische Erfassungseinrichtung ausgebildet ist, um das Objekt entlang oder parallel zu der Bewegungsrichtung zu erfassen. Die Auswerteeinrichtung ist ausgebildet, um das Muster auf einen Objektcode auszuwerten, der eine Identität des Objekts angibt, und auf einen hiervon separat angeordneten Oberflächencode auszuwerten, der einen bestimmten Oberflächenbereich des Objekts angibt, und um die relative Lokalisierung bezüglich des Objekts und des Oberflächenbereichs zu ermitteln.

Gemäß einem Ausführungsbeispiel ist das Muster ein zweidimensionaler QR-Code (QR = Quick Response, schnelle Antwort), der eine Mehrzahl von Markierungsbereichen umfasst, zwischen denen entlang unterschiedlicher räumlicher Richtungen ein Objektcode zum Identifizieren des Objekts und ein Oberflächencode zum Identifizieren einer Oberfläche des Objekts angeordnet sind. Dies ermöglicht über die Lokalisierung bezüglich des Objekts hinaus auch die Orientierung an einzelnen Oberflächen des Objekts.

Gemäß einem Ausführungsbeispiel ist die Auswerteeinrichtung ausgebildet, um durch einen Größenvergleich des ersten Markierungsbereichs und des zweiten Markierungsbereichs eine Rotation des Objekts bezüglich der Vorrichtung zu bestimmen. Dies ermöglicht eine präzise Richtungsbestimmung bezüglich des Objekts, um beispielsweise senkrecht oder parallel oder in einem anderen Winkel zu der Oberfläche zu fahren.

Gemäß einem Ausführungsbeispiel ist die Vorrichtung ein Bodenfahrzeug, das ausgebildet ist, um sich unter Verwendung der Antriebseinrichtung horizontal fortzubewegen. Die Auswerteeinrichtung ist ausgebildet, um das Muster bezüglich einer horizontalen Anordnung des ersten Musterbereichs und des zweiten Musterbereichs auszuwerten, um eine Rotation des Objekts um eine vertikale Achse zu bestimmen, welche auf einer Orientierung der Vorrichtung bezogen ist. Dies ermöglicht eine präzise Bestimmung der Orientierung der Oberfläche bezüglich der Vorrichtung.

Gemäß einem Ausführungsbeispiel ist die Auswerteeinrichtung ausgebildet, um das Muster bezüglich einer vertikalen Anordnung des ersten Musterbereichs und des zweiten Musterbereichs auszuwerten, um eine auf eine Orientierung der Vorrichtung bezogene Rotation des Objekts um eine horizontale Achse zu bestimmen. Dies kann insbesondere vorteilhaft sein, wenn die Vorrichtung und das Objekt in unterschiedlichen Höhenebenen angeordnet sein können. Die Auswertung auf eine Rotation des Objekts um eine vertikale Achse und bezogen auf eine Rotation des Objekts um eine horizontale Achse kann kombiniert werden, beispielsweise indem zumindest drei Markierungsbereiche in dem zweidimensionalen Muster erkannt werden, beispielsweise zwei entlang einer Richtung, die zumindest eine horizontale Komponente aufweist und zwei Markierungsbereiche, die entlang einer Richtung angeordnet sind, die zumindest eine vertikale Richtungskomponente aufweist. Wird beispielsweise eine diagonale Anordnung des ersten und zweiten Markierungsbereichs bezüglich horizontaler/vertikaler Richtung vorgesehen, so kann mittels zweier Markierungsbereiche auch eine Auswertung bezüglich beider Rotationen ausgeführt werden.

Gemäß einem Ausführungsbeispiel ist die Auswerteeinrichtung ausgebildet, um durch einen Vergleich einer Größe des ersten Musterbereichs mit einer Referenzgröße oder eines zweiten Musterbereichs in der Aufnahme mit der Referenzgröße einen Objektabstand zwischen der Vorrichtung und dem Objekt zu bestimmen, und um die relative Lokalisierung basierend auf dem Objektabstand zu bestimmen. Über die relative Orientierung kann somit auch der Abstand als Teil der relativen Lokalisierung erfassbar sein.

Gemäß einem Ausführungsbeispiel ist die Auswerteeinrichtung ausgebildet, um das Muster bezüglich eines dritten Musterbereichs und eines vierten Musterbereichs auszuwerten, die gemeinsam mit dem ersten Musterbereich und dem zweiten Musterbereich ein Rechteck aufspannen, und um aus Abweichungen der ersten bis vierten Musterbereiche von der Anordnung als Rechteck die relative Lokalisierung zu bestimmen. Dies ermöglicht eine robuste relative Lokalisierungsbestimmung, da gegebenenfalls auch redundante Informationen berücksichtigt werden können.

Gemäß einem Ausführungsbeispiel ist die Auswerteeinrichtung ausgebildet, um die Aufnahme auf einen Objektcode auszuwerten, und um basierend auf dem Objektcode eine Identifizierung des Objekts auszuführen, wobei die Steuerungseinrichtung ausgebildet ist, um die Antriebseinrichtung basierend auf der Objektidentifizierung zu steuern. Die Objektidentifizierung kann Teil der relativen Lokalisierung sein, indem die Vorrichtung ihre relative Position und/oder Orientierung bezüglich des Objekts bestimmt.

Gemäß einem Ausführungsbeispiel ist die Auswerteeinrichtung ausgebildet, um die Aufnahme auf einen Oberflächencode auszuwerten, und um basierend auf dem Oberflächencode eine Oberflächenidentifizierung einer Oberfläche des Objekts auszuführen, wobei die Steuerungseinrichtung ausgebildet ist, um die Antriebseinrichtung basierend auf der Oberflächenidentifizierung zu steuern. Dies ermöglicht es der Vorrichtung, sich nicht nur bezüglich des Objekts zu orientieren, sondern sich auch bezüglich einzelner Oberflächen oder Seiten des Objekts zu orientieren, etwa um speziellen Seiten auszuweichen oder diese konkret anzusteuern.

Gemäß einem Ausführungsbeispiel ist die Auswerteeinrichtung ausgebildet, um die Aufnahme auf einen zwischen dem ersten und dem zweiten Markierungsbereich angeordneten Objektcode auszuwerten, der eine Identität des Objekts angibt. Dies ermöglicht die synergetische Nutzung der Markierungsbereiche sowohl zum Bestimmen zumindest von Teilen der relativen Lokalisierung als auch als Orientierungshilfe, um zusätzliche Information aufzufinden.

Gemäß einem Ausführungsbeispiel ist die Auswerteeinrichtung ausgebildet, um das Muster auf zumindest einen dritten Markierungsbereich hin auszuwerten, und um die Aufnahme auf einen zwischen dem ersten und dem zweiten Markierungsbereich angeordneten Objektcode auszuwerten, der eine Identität des Objekts angibt. Die Auswerteeinrichtung ist ferner ausgebildet, um die Aufnahme auf einen zwischen dem dritten Markierungsbereich und dem ersten Markierungsbereich oder zwischen dem ersten Markierungsbereich und dem zweiten Markierungsbereich angeordneten Oberflächencode auszuwerten, der eine Identität einer Seite des Objekts angibt, an welche das Muster angeordnet ist. Durch den Oberflächencode können sich unterschiedliche Seiten des Objekts voneinander unterscheiden lassen. Darüber hinaus ist auch hier eine synergetische Nutzung der Markierungsbereiche möglich, um eine Orientierungshilfe für das Auffinden des Oberflächencodes zu geben. Kombinatorisch mit dem Objektcode kann somit durch Anordnen des Oberflächencodes und des Oberflächencodes zwischen unterschiedlichen, zuvor festgelegten Markierungsbereichen eine eindeutige Identifizierung des Objekts und der Oberfläche hiervon erfolgen, wobei die Informationen zuverlässig aufgefunden werden können.

Gemäß einem Ausführungsbeispiel ist die Auswerteeinrichtung ausgebildet, um das Muster auf einen Objektcode auszuwerten, der eine Identität des Objekts angibt, und auf einen hiervon separat angeordneten Oberflächencode auszuwerten, der einen bestimmten Oberflächenbereich des Objekts, etwa eine Seite, angibt, und um die relative Lokalisierung bezüglich des Objekts und des Oberflächenbereichs zu ermitteln. Durch die separate Anordnung, d. h., eine räumliche Trennung, des Oberflächencodes und des Objektcodes kann die Eindeutigkeit einer jeweiligen Information bzw. eines jeweiligen Codes unterstützt werden.

Darüber hinaus ist es möglich, durch die separate Anordnung der Codes den jeweiligen Objektcode und den jeweiligen Oberflächencode mit wenig Zeichen, Bits oder anderen Symbolen darzustellen, da jede Objektklasse, das Objekt an sich und eine Seite hiervon, für sich genommen codiert werden kann.

Gemäß einem Ausführungsbeispiel ist die Steuerungseinrichtung ausgebildet, um eine Anweisung auszuführen, die angibt, eine vorbestimmte relative Position zu einer vorbestimmten Seite eines vorbestimmten Objekts einzunehmen. Die Steuerungseinrichtung ist ausgebildet, um basierend auf der Lokalisierungsinformation die eigene Position durch Ansteuerung der Antriebseinrichtung entsprechend der Anweisung anzupassen. Dies ermöglicht es der Vorrichtung selbständig die entsprechende relative Position bezüglich des Objekts einzunehmen.

Gemäß einem Ausführungsbeispiel weist die Vorrichtung eine Koppeleinrichtung auf, die ausgebildet ist, um eine mechanische Kopplung mit einer korrespondierenden mechanischen Koppeleinrichtung des Objekts auszuführen. Korrespondierend kann hierbei ein auf die Koppeleinrichtung angepasstes Gegenstück bedeuten, das im Sinne zweier gleicher Teile verstanden werden kann, aber auch im Sinne eines Stecker/Buchse-Konzepts, eines Konzepts ähnlich einem magnetischen Nordpol/Südpol oder dergleichen implementiert werden kann. Hierdurch ist es möglich, eine mechanische Kopplung zwischen der Vorrichtung und dem Objekt auszuführen, um beispielsweise eine Übergabe eines Gegenstands zu ermöglichen und/oder eine kombinierte Vorrichtung zu bilden, die beispielsweise ausgebildet ist, um gemeinschaftlich Lasten zu transportieren. Beispielsweise kann sich auch mit anderen Vorrichtungen oder Objekten verbunden werden, etwa einer Ladestation oder dergleichen.

Gemäß einem Ausführungsbeispiel ist die Vorrichtung ausgebildet, um sich an dem zweidimensionalen Muster auszurichten, um die mechanische Koppeleinrichtung mit der korrespondierenden mechanischen Koppeleinrichtung mechanisch zu verbinden. Die relative Lokalisierung kann somit genutzt werden, um die Vorrichtung selbst bezüglich der korrespondierenden mechanischen Koppeleinrichtung des Objekts auszurichten, um die mechanische Verbindung zu ermöglichen.

Gemäß einem Ausführungsbeispiel weist die Vorrichtung in einer Aufsicht eine polygone Fläche auf, bevorzugt eine geradzahlig polygone Fläche und insbesondere bevorzugt gemäß einem regelmäßig oder unregelmäßig geformten Achteck. An zumindest zwei Flächen des Polygons weist die Vorrichtung eine mechanische Koppeleinrichtung auf. Dies ermöglicht eine hochflexible Ausprägung im Hinblick auf die Koppelfähigkeit mit anderen Objekten. Die Ausbildung als polygone Fläche ist dabei näherungsweise zu verstehen, da auch abgerundete Ecken oder Kanten als Polygon verstanden werden.

Gemäß einem Ausführungsbeispiel weist die Vorrichtung selbst ein zweidimensionales Muster an zumindest einer Seite auf, an welcher die mechanische Koppeleinrichtung angeordnet ist. Dies ermöglicht es anderen Vorrichtungen, die Seite präzise anzusteuern, an welcher die mechanische Koppeleinrichtung angeordnet ist.

Gemäß einem Ausführungsbeispiel umfasst ein Vorrichtungsverbund eine Mehrzahl von hierin beschriebenen Vorrichtungen. Die Mehrzahl von Vorrichtungen weist jeweils an zumindest einer Oberfläche ein Vorrichtungsmuster auf, beispielsweise ein beschriebenes zweidimensionales Muster. Das Vorrichtungsmuster gibt zumindest eine Objektseite oder eine Objektidentität an. Die Mehrzahl von Vorrichtungen ist ausgebildet, um sich untereinander relativ zueinander basierend auf der jeweiligen relativen Lokalisierung zu orientieren.

Gemäß einem Ausführungsbeispiel sind die Vorrichtungen der Mehrzahl von Vorrichtungen ausgebildet, um das Vorrichtungsmuster anderer Vorrichtungen zu erfassen, und um basierend auf Objektcodes und/oder Oberflächencodes eine relative Lage bezüglich einer anderen Vorrichtung des Vorrichtungsverbunds oder einer Oberfläche hiervon einzunehmen. Dies ermöglicht die Navigation der Vorrichtungen als autonomer Schwarm.

Gemäß einem Ausführungsbeispiel ist die Mehrzahl von Vorrichtungen ausgebildet, um sich untereinander mechanisch zu koppeln, was eine Übergabe von Gegenständen und/oder eine kooperative bzw. kombinatorische Bewältigung einer Transportaufgabe ermöglicht.

Gemäß einem Ausführungsbeispiel der Erfindung umfasst ein Verfahren, mit welchem beispielsweise hierin beschriebene Vorrichtungen gesteuert werden können, ein Steuern einer Antriebseinrichtung, um die Vorrichtung in einer oder parallel zu einer Bewegungsebene anzutreiben, etwa entlang einer Bewegungsrichtung, und zu bewegen. Das Verfahren umfasst ein Steuern einer optischen Erfassungseinrichtung einer Vorrichtung, um ein Objekt in der oder parallel zu der Bewegungsebene zu erfassen, um eine Aufnahme des Objekts zu erhalten.

Das Verfahren umfasst ein Steuern einer Auswerteeinrichtung, um die Aufnahme auf ein zumindest zweidimensionales Muster hin auszuwerten, und um das Muster bezüglich zumindest eines ersten Markierungsbereichs und eines zweiten Markierungsbereichs auszuwerten, um durch Vergleich des ersten Markierungsbereichs und des zweiten Markierungsbereichs ein Markierungsergebnis zu erhalten, und um basierend auf dem Markierungsergebnis eine relative Lokalisierung der Vorrichtung bezüglich des Objekts zu ermitteln. Das Verfahren umfasst ein Steuern einer Steuerungseinrichtung, um die Antriebseinrichtung basierend auf der relativen Lokalisierung zu steuern. Das Verfahren wird ausgeführt, so dass das Muster auf einen Objektcode ausgewertet wird, der eine Identität des Objekts angibt, und auf einen hiervon separat angeordneten Oberflächencode ausgewertet wird, der einen bestimmten Oberflächenbereich des Objekts angibt, so dass die relative Lokalisierung bezüglich des Objekts und des Oberflächenbereichs ermittelt wird.

Weitere vorteilhafte Ausgestaltungen der vorliegenden Erfindung sind in weiteren abhängigen Patentansprüchen definiert.

Unter Bezugnahme auf die beiliegenden Zeichnungen werden bevorzugte Ausführungsbeispiele nachfolgend erläutert. Es zeigen:
- Fig. 1: ein schematisches Blockschaltbild einer Vorrichtung gemäß einem Ausführungsbeispiel;
- Fig. 2a: eine schematische Ansicht eines unverzerrten Musters gemäß einem Ausführungsbeispiel;
- Fig. 2b: eine schematische perspektivische Ansicht des Musters aus Fig. 2a in einer perspektivischen Ansicht;
- Fig. 3: eine schematische Ansicht eines Musters gemäß einem Ausführungsbeispiel, das als zweidimensionaler QR-Code mit drei Musterbereichen gebildet ist;
- Fig. 4: eine schematische Darstellung eines Musters gemäß einem Ausführungsbeispiel, das zumindest vier Musterbereiche;
- Fig. 5: eine schematische Aufsicht auf eine Vorrichtung gemäß einem Ausführungsbeispiel, die eine oder mehrere Koppeleinrichtungen aufweist;
- Fig. 6: eine schematische Aufsicht auf eine Vorrichtung gemäß einem Ausführungsbeispiel, bei der jede der beispielhaft sechs Seiten mit einem Seiten-individuellen Muster versehen ist;
- Fig. 7: eine schematische Aufsicht auf einen Vorrichtungsverbund gemäß einem Ausführungsbeispiel, bei dem Vorrichtungen eindimensional gekoppelt sind;
- Fig.8: eine schematische Aufsicht auf einen Vorrichtungsverbund gemäß einem Ausführungsbeispiel, der ebenfalls eine Mehrzahl von zweidimensional gekoppelten Vorrichtungen aufweist; und
- Fig. 9: eine beispielhafte perspektivische Photographie eines Vorrichtungsverbunds gemäß einem Ausführungsbeispiel.

Bevor nachfolgend Ausführungsbeispiele im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Vorliegende Ausführungsbeispiele beziehen sich auf Vorrichtungen, insbesondere auf selbstfahrende Roboter. Hierzu gehören beispielsweise autonom fahrende Roboter, wobei autonom dahin gehend zu verstehen ist, dass beispielsweise in einem Vorrichtungsverbund, etwa einem Roboter-Schwarm eigenständig Lösungen für spezielle Aufgaben entwickelt werden. Dies schließt äußere Einflussnahmen, etwa durch übergeordnete Übermittlung einer Aufgabe, etwa Objekt zu transportieren oder Tätigkeiten an speziellen Orten zu verrichten, nicht aus. Begriffe wie "selbstfahrend" oder "autonom fahrend" können so verstanden werden, dass dabei die Aufgabe der Umfelderkennung und Orientierung sowie der selbständigen Fortbewegung zur Erfüllung der Aufgaben gelöst wird.

Obwohl sich hierin beschriebene Ausführungsbeispiele auf fahrende Vorrichtungen, beispielsweise unter Verwendung von Rädern, Rollen oder Ketten bezieht, sind die Ausführungsbeispiele hierauf nicht beschränkt, sondern beziehen sich auf jegliche Form von eindimensionaler, zweidimensionaler oder dreidimensionaler Fortbewegung, insbesondere auf fliegende Vorrichtungen und/oder Vorrichtungen, bei denen zumindest eine Arbeitsebene bezüglich einer Höhenrichtung in der Position veränderlich ist, wie es beispielsweise bei Gabelstaplern der Fall ist.

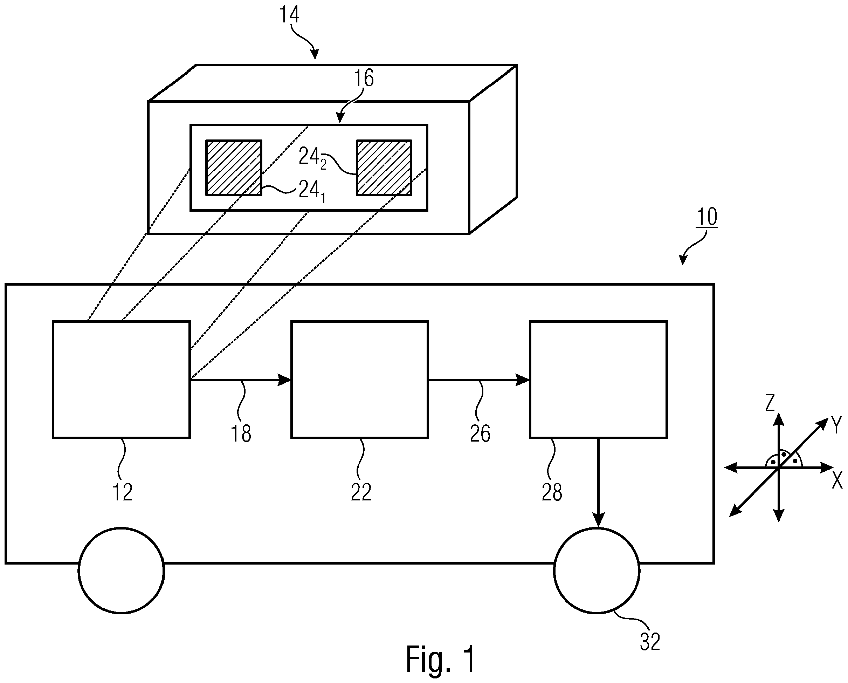

Fig. 1 zeigt ein schematisches Blockschaltbild einer Vorrichtung 10 gemäß einem Ausführungsbeispiel. Die Vorrichtung 10 umfasst eine optische Erfassungseinrichtung 12, die ausgebildet ist, um ein Objekt 14 zu erfassen, um eine Aufnahme des Objekts 14 zu erhalten. Die optische Erfassungseinrichtung 12 kann eine Zeilenkamera oder eine Flächenkamera sein, kann aber alternativ auch beispielsweise als Scanner ausgebildet sein, beispielsweise als Zeilenscanner. Die optische Erfassungseinrichtung 12 kann unter optischer Abtastung die Aufnahme des Objekts 14 erhalten. Hierzu kann eine Abbildung auf einem Bildsensor erhalten werden. Alternativ ist es jedoch ebenfalls möglich, beispielsweise durch Abrasterung entlang einer Zeile, eine sequenzielle Information bezüglich des Objekts 14 oder Teilen hiervon zu erhalten, wozu auch eine Transformation des Objekts 14 bzw. des Teils hiervon gehören kann. So kann die optische Erfassungseinrichtung 12 ausgebildet sein, um zumindest ein zweidimensionales oder dreidimensionales Muster 16, welches an dem Objekt 14 angeordnet ist, abzutasten. Während dies bei einer Flächenkamera durch Abbilden des Objekts 14 mit erfolgen kann, kann beispielsweise ein Laserscanner auf entsprechende Eigenschaften des Musters 16 voreingestellt sein, so dass ein entsprechendes Ausgangssignal 18 der optischen Erfassungseinrichtung 12 zumindest in Teilen auf die Eigenschaften des Musters 16 beschränkt sein kann.

Die Vorrichtung 10 umfasst eine Antriebseinrichtung 22, die ausgebildet ist, um die Vorrichtung 10 anzutreiben und zu bewegen. Beispielsweise kann die Vorrichtung 10 als Bodenfahrzeug ausgebildet sein, um sich unter Verwendung der Antriebseinrichtung 22 horizontal fortzubewegen, etwa auf einer Bodenfläche oder dergleichen, etwa in einer x/y-Ebene. Alternativ oder zusätzlich kann, beispielsweise durch eine Höhenverstellung, zumindest ein Teil der Vorrichtung 10 entlang einer z-Richtung veränderlich sein. Alternativ oder zusätzlich kann die Vorrichtung 10 ausgebildet sein, um sich dreidimensional oder eindimensional im Raum zu bewegen.

Im Fall einer zweidimensionalen Bewegung kann eine Bewegung parallel zu der x/y-Ebene erfolgen, wobei die Bezugsebene abhängig vom Untergrund auf welchem die Vorrichtung bewegt wird, auch gekrümmt oder geneigt sein kann, etwa wenn der Boden uneben ist. Die Bewegung der Vorrichtung 10 kann entlang einer veränderlichen Bewegungsrichtung erfolgen, die bspw. eine x-Komponente und/oder eine y-Komponente aufweisen kann. Die Vorrichtung kann ausgebildet sein, um zusätzlich zu der Antriebseinrichtung 32, die die Vorrichtung entlang der Bewegungsrichtung bewegt, das Objekt 14 entlang oder parallel zu einer derzeitigen oder möglichen Bewegungsrichtung zu erfassen. Hierzu kann die optische Erfassungseinrichtung 12 ausgebildet sein, um das Objekt 14 in der x/y-Ebene oder versetzt oder geneigt hierzu zu erfassen. Das bedeutet, die optische Erfassungseinrichtung 12 kann das Objekt 14 entlang oder parallel zu der Bewegungsrichtung erfassen. Die erfasste Oberfläche des Objekts 14 ist somit out-of-plane bezüglich der Bewegungsebene angeordnet bspw. senkrecht hierzu oder zumindest ungleich 90° geneigt hierzu, so dass eine Erfassung des Objekts 14 bei einer Blickrichtung parallel zu der Bewegungsrichtung eine Erfassung des Musters ermöglicht. Dies kann dazu genutzt werden, um andere Vorrichtungen, Stationen oder Einrichtungen zu erkennen, mit denen interagiert werden soll und ist von Bodenmarkierungen zu unterscheiden, die lediglich zur Navigation genutzt werden, senkrecht zu der Bewegungsrichtung angeordnet sind und als bezüglich der Position unveränderlich angenommen werden.

Die Auswerteeinrichtung 22 kann ausgebildet sein, um die Aufnahme, die mittels des Ausgangssignals 18 erhalten wird, auf das Muster 16 hin auszuwerten. Das bedeutet, das Muster 16 kann bezüglich vordefinierter Merkmale ausgewertet werden. Beispielsweise kann das Muster 16 zwei oder mehr Markierungsbereiche 24₁ und 24₂ aufweisen. Die Auswerteeinrichtung 22 kann ausgebildet sein, um das Muster 16 bezüglich zumindest zweier Markierungsbereiche 24₁ und 242 auszuwerten. Die Auswerteeinrichtung 22 ist ferner ausgebildet, um einen Vergleich unter Verwendung der Markierungsbereiche 24₁ und 24₂ auszuführen. Der Vergleich kann einen Vergleich von Merkmalen der Markierungsbereiche 24, und 24₂ untereinander umfassen, kann alternativ oder zusätzlich aber auch einen Vergleich des jeweiligen Markierungsbereichs 24₁ und/oder 24₂ bzw. Merkmalen hiervon mit einer jeweiligen Referenzgröße umfassen. Basierend auf dem Vergleich ist die Auswerteeinrichtung 22 ausgebildet, um ein Markierungsergebnis zu erhalten. Basierend auf dem Markierungsergebnis kann die Auswerteeinrichtung 22 ausgebildet sein, um eine relative Lokalisierung der Vorrichtung 10 bezüglich des Objekts 14, insbesondere des Musters 16 zu ermitteln. Mittels eines Signals 26 kann die relative Lokalisierung einer Steuerungseinrichtung 28 übermittelt werden, die ausgebildet ist, um eine Antriebseinrichtung 32 zu steuern. Die Steuerungseinrichtung 28 ist ausgebildet, um die Antriebseinrichtung 32 basierend auf der relativen Lokalisierung zu steuern. Die Antriebseinrichtung 32 kann Aktuatorik aufweisen, beispielsweise Räder, Rollen, Ketten, Propeller oder dergleichen, um die Position der Vorrichtung 10 im Raum zu verändern. Das bedeutet, die Vorrichtung 10 kann sich basierend auf dem erkannten Muster 16 und der Auswertung der Mustermerkmale, insbesondere der Markierungsbereiche 24₁ und 24₂ im Raum bewegen.

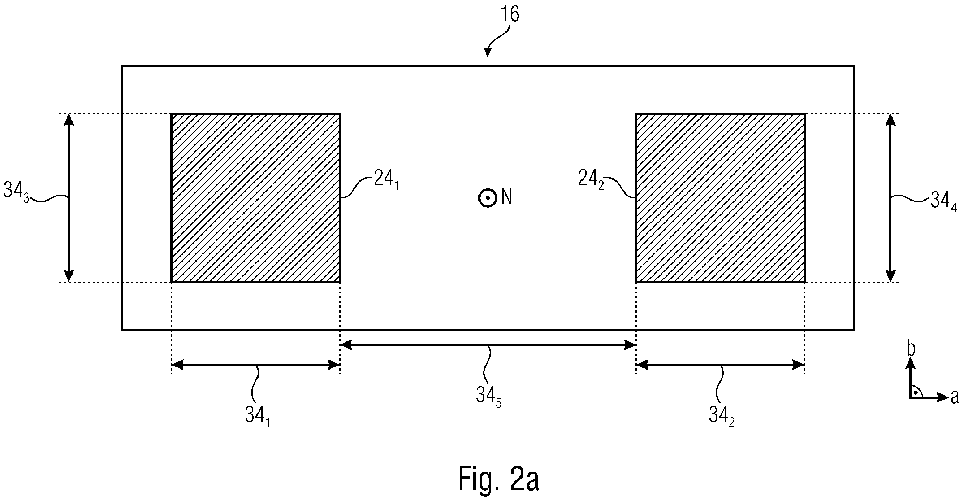

Fig. 2a zeigt eine schematische Ansicht des Musters 16, beispielsweise in einem unverzerrten Zustand, etwa wenn die Erfassungseinrichtung 12 senkrecht bzw. parallel zu einer Oberflächennormalen N auf das Muster 16 blickt. Die Markierungsbereiche 24₁ und 24₂ können bezogen auf eine Referenzgröße vordefinierte Eigenschaften aufweisen. So kann beispielsweise eine Abmessung 34, und 34₂ der Markierungsbereiche 24₁ und 24₂ entlang einer selben Richtung, beispielsweise entlang einer Richtung a, gleich sein. Alternativ kann die Abmessung 34₁ relativ zu der Abmessung 34₂ ein vordefiniertes Verhältnis aufweisen, das von einem Verhältnis von 1:1 abweicht, etwa 1:1,1, 1:1,2, 1:1,3 oder ein beliebig anderer Wert, wobei es beliebig sein kann, welche der Abmessungen 34₁ oder 34₂ größer oder kleiner ist. Alternativ oder zusätzlich können Abmessungen 34₃ und 34₄, die beispielsweise entlang einer Richtung b angeordnet sein können, gleich oder voneinander verschieden sein, zumindest in einem Referenzzustand, etwa der senkrechten Betrachtung.

Alternativ oder zusätzlich kann eine Abmessung 34₅, beispielsweise ein Abstand zwischen einander zugewandten Kanten der Markierungsbereiche 24₁ und 24₂ zumindest in einem vordefinierten Abstand zwischen der Erfassungseinrichtung 12 und dem Muster 16 einen vordefinierten Wert aufweisen. Die Abmessung 34s kann sich auch auf andere Kanten der Markierungsbereiche 24₁ und 24₂ beziehen.

Obwohl die Markierungsbereiche 24, und 24₂ als Quadrate dargestellt sind, ist auch eine hiervon abweichende Form möglich, beispielsweise eine Freiformfläche, ein Polygon, welches regelmäßig oder unregelmäßig geformt ist, eine Ellipse, insbesondere ein Kreis oder Kombinationen hieraus, beispielsweise einander umschließende Polygone oder Ellipsen.

In der dargestellten Ansicht des Musters 16, in welcher die Erfassungseinrichtung 12 beispielhaft senkrecht auf das Muster 16 blickt, kann die Richtung a beispielsweise parallel zu der x-Richtung und die Richtung b parallel zu der z-Richtung der Fig. 1 ausgerichtet sein, wobei eine derart beispielhafte Ausgestaltung die vorliegenden Ausführungsbeispiele nicht beschränken soll. Die Oberflächennormale N kann beispielsweise parallel zu der y-Richtung der Fig. 1 ausgerichtet sein.

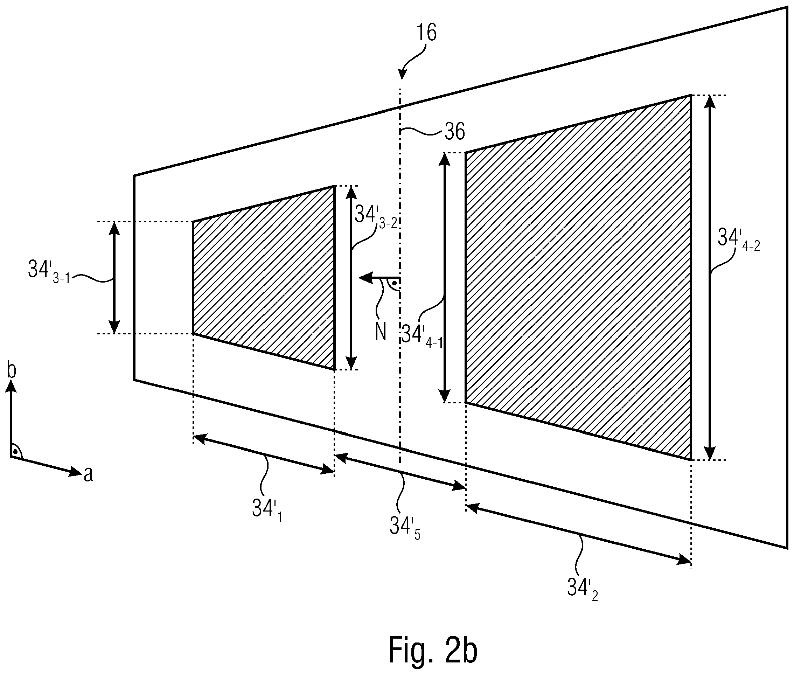

Fig. 2b zeigt eine schematische perspektivische Ansicht des Musters 16 aus Fig. 2a. Durch die Perspektive kann die Oberflächennormale N von der Betrachtungsrichtung abweichen.

Wie es beispielhaft dargestellt ist, können sich innerhalb des Musters 16, welches von der Erfassungseinrichtung 12 erfasst wird, Verzerrungen ergeben. So können beispielsweise ansonsten gleichlange oder in einem bestimmten Verhältnis stehende Kanten verändert sein, wie es beispielsweise für Abmessungen 34'₃₋₁ und 34'₃₋₂ dargestellt ist, die in der Ansicht der Fig. 2a der Abmessung 34₃ entsprechen. Alternativ oder zusätzlich können Abmessungen 34'₄₋₁ und 34'₄₋₂, die in der Ansicht der Fig. 2a der Abmessung 34₄ entsprechen, voneinander verschieden sein. Auch zwischen den Abmessungen 34'₃ und 34'₄ können durch die Perspektive entsprechende Abweichungen entstehen. In der möglicherweise zweidimensionalen Abbildung, die von der Erfassungseinrichtung 12 erhalten wird, können sich dadurch auch die Abmessungen 34'₁ und 34'₂ sowohl voneinander als auch unabhängig hiervon von Referenzwerten unterscheiden. Ähnliches gilt auch für eine Abmessung 34'₅.

Das bedeutet, basierend auf der Perspektive kann eine Verzerrung in dem Muster 16 erfolgen, was durch die Auswerteeinrichtung 22 feststellbar ist, um die relative Lokalisierung der Vorrichtung bezüglich des Objekts, insbesondere des Musters 16 zu ermitteln.

Ein Vergleich der Abmessungen der Fig. 2a oder der Fig. 2b mit einer Referenzgröße, beispielsweise einer Größe, die angibt, wie groß die Abbildung auf einem Bildsensor oder dergleichen ist, kann der Auswerteeinrichtung 22 ferner ermöglichen, einen Abstand zwischen der Vorrichtung und dem Objekt zu bestimmen. Die relative Lokalisierung kann sich somit auch auf den Objektabstand beziehen, was bedeutet, dass die relative Lokalisierung basierend auf dem Objektabstand bestimmt werden kann. Hierzu kann die Auswerteeinrichtung 22 ausgebildet sein, um durch einen Vergleich einer Größe oder Abmessung innerhalb des Musterbereichs 24₁ und/oder 24₂ in der Aufnahme und mit einer Referenzgröße den Objektabstand zu bestimmen.

Unabhängig hiervon kann die Auswerteeinrichtung 22 ausgebildet sein, um das Muster 16 bezüglich einer horizontalen Anordnung der Musterbereiche 24₁ und 24₂ auszuwerten, um eine Orientierung der Vorrichtung 10 bezogen auf eine Rotation der Vorrichtung 10 bezüglich des Objekts 14 um eine Achse 36 zu bestimmen. Ist die Vorrichtung 10 beispielsweise als Bodenfahrzeug gebildet, so kann die Achse 36 vertikal ausgerichtet sein, beispielsweise parallel zu der b-Richtung oder z-Richtung.

Alternativ oder zusätzlich ist es möglich, die Auswerteeinrichtung 22 so auszugestalten, dass diese das Muster 16 bezüglich einer vertikalen Anordnung der Musterbereiche 24, und 24₂ auswertet, um eine auf eine Orientierung der Vorrichtung 10 bezogene Rotation des Objekts 14 um eine horizontale Achse zu bestimmen. So könnte sich beispielsweise durch Höhenunterschiede ein Unterschied in Abmessungen 34'₁ oder 34'₂ an unterschiedlichen Stellen des Musters ergeben, was äquivalent auswertbar ist. Hierzu könnten die Musterbereiche 24₁ und 24₂ beispielsweise entlang der b-Richtung angeordnet werden. Eine Verschiebung der Musterbereiche 24₁ und 24₂ entlang zweier Richtungen, etwa entlang einer Diagonalen, kann eine kombinatorische Auswertung bezüglich einer Rotation der Vorrichtung bezüglich des Objekts um eine horizontale und eine vertikale Achse ermöglichen.

Den Ausführungsbeispielen gemein ist, dass durch einen Größenvergleich der Markierungsbereiche 24₁ und 24₂ eine Rotation des Objekts bezüglich der Vorrichtung von der Auswerteeinrichtung 22 bestimmt werden kann, was umgekehrt und im Sinne der relativen Lokalisierung äquivalent eine Rotation der Vorrichtung bezüglich des Objekts bedeutet.

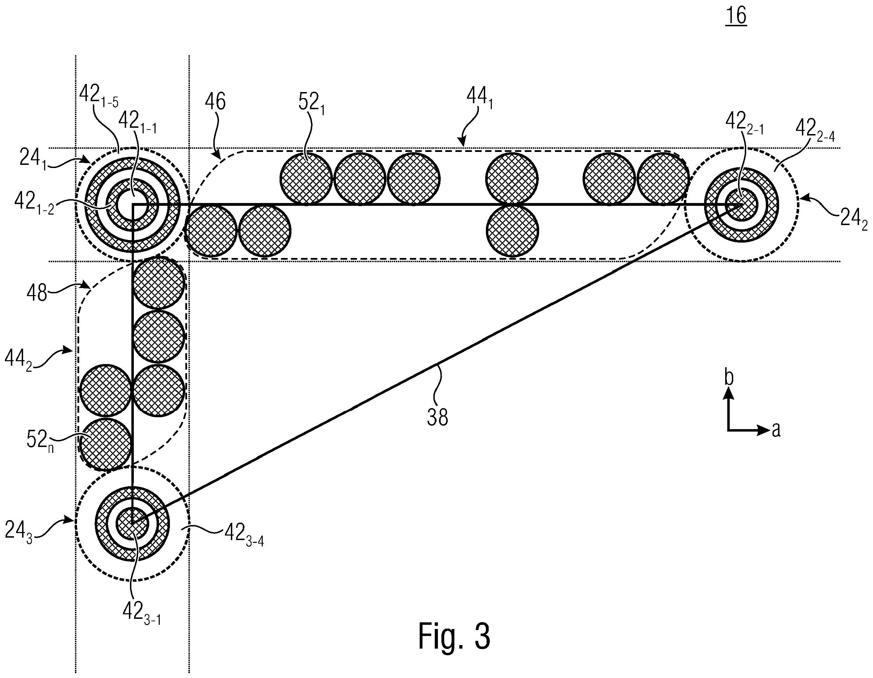

Fig. 3 zeigt eine schematische Ansicht eines Musters 16 gemäß einem Ausführungsbeispiel, das als zweidimensionaler QR-Code gebildet ist. Das Muster 16 umfasst zumindest zwei, beispielhaft drei Markierungsbereiche 24₁, 24₂ und 24₃, deren Anordnung zur Flächeneffizienz und präzisen Bestimmung der relativen Lokalisierung ein Dreieck 38 aufspannen. Dies schließt eine Anordnung entlang einer Linie nicht aus, bietet aber Vorteile im Hinblick auf die Ausgestaltung in Verbindung mit zusätzlicher Information, wie es nachfolgend ausgeführt wird.

Die Markierungsbereiche 24₁, 24₂ und/oder 24₃ können gleich oder voneinander verschieden gebildet sein. Beispielhaft können eine voneinander verschiedene Anzahl von einander umschließenden Ringmustern 42₁₋₁ bis 42₁₋₅, 42₂₋₁ bis 42₂₋₄ und/oder 42₃₋₁ bis 42₃₋₄ in voneinander verschiedenen Markierungsbereichen 24₁, 24₂ bzw. 24₃ angeordnet sein. Beispielsweise können äußere Umfänge der Markierungsbereiche 24₁ bis 24₃ entlang der Richtungen a und b, die ein Muster-spezifisches Koordinatensystem aufspannen können, Musterbereiche 44₁ und 44₂ aufspannen, die jeweils zwischen zwei benachbarten Markierungsbereichen 24₁ und 24₂ bzw. 24₁ und 24₃ angeordnet sind. Entlang der unterschiedlichen räumlichen Richtungen a und b können somit in den entlang dieser Richtungen angeordneten Musterbereichen 44, und 44₂ zusätzliche Informationen dargestellt werden, welche von der Erfassungseinrichtung 12 erfasst und von der Auswerteeinrichtung 22 ausgewertet werden können. So können unterschiedliche Informationen oder Codes 46 und 48 enthalten sein, wobei alternativ auch lediglich einer der Codes 46 oder 48 dargestellt werden kann. Jeder der Codes 46 und 48 kann unabhängig voneinander eine bestimmte Information enthalten, welche von der Auswerteeinrichtung 22 auswertbar sein kann. Beispielsweise kann der Code 46 ein Objektcode zum Identifizieren des Objekts 14 umfassen, der es beispielsweise ermöglicht, innerhalb eines bestimmten Systems oder Schwarms von Vorrichtungen ein Objekt eindeutig zu identifizieren. Der Code 48 kann beispielsweise einen Oberflächencode zum Identifizieren einer bestimmten Oberfläche des Objekts 14 umfassen. Anders ausgedrückt kann die Auswerteeinrichtung 22 ausgebildet sein, um das Muster 16 auf den Objektcode 46 hin auszuwerten, der eine Identität des Objekts angibt. Die Auswerteeinrichtung 22 kann ferner ausgebildet sein, um das Muster 16 auf einen von dem Objektcode 46 separat angeordneten Oberflächencode 48 auszuwerten, der einen bestimmten Oberflächenbereich des Objekts 14, beispielsweise eine Seite hiervon, angibt, um die relative Lokalisierung bezüglich des Objekts 14 und des Oberflächenbereichs zu ermitteln. Die Codes 46 und 48 können alternativ oder zusätzlich auch andere Informationen aufweisen oder können miteinander vertauscht werden. Beispielsweise sind die jeweiligen Musterbestandteile 52₁ bis 52ₙ rund gebildet, sie können jedoch auch beliebig anders gebildet sein, beispielsweise entlang einer Freiformfläche, eines Polygons, einer Ellipse oder dergleichen. Die Musterbestandteile 52 innerhalb eines Codes können gleich oder voneinander verschieden gebildet sein. Ebenso können die Musterbestandteile in unterschiedlichen Codes gleich oder voneinander verschieden gebildet sein.

Die Auswerteeinrichtung 22 kann ausgebildet sein, um die Aufnahme auf den Objektcode 46 hin auszuwerten, und um basierend auf dem Objektcode 46 eine Objektidentifizierung des Objekts 14 auszuführen. Die Steuerungseinrichtung 28 kann ausgebildet sein, um die Antriebseinrichtung 32 basierend auf der Objektidentifizierung zu steuern. Das bedeutet, die Objektidentifizierung kann einen Teil der relativen Lokalisierung bilden. Es ist der Vorrichtung 10 dadurch beispielsweise möglich, nicht nur die Anwesenheit irgendeines Objekts zu bestimmen und/oder eine relative Orientierung oder Rotation zu dem Objekt zu bestimmen, sondern auch um das Objekt zu identifizieren und beispielsweise von anderen Objekten zu unterscheiden.

Alternativ oder zusätzlich kann die Auswerteeinrichtung 22 ausgebildet sein, um die Aufnahme auf den Oberflächencode 48 hin auszuwerten, und um basierend auf dem Oberflächencode 48 eine Oberflächenidentifizierung einer Oberfläche des Objekts 14 auszuführen. Die Steuerungseinrichtung 28 kann ausgebildet sein, um die Antriebseinrichtung 32 basierend auf der Oberflächenidentifizierung zu steuern. Dies ermöglicht es der Vorrichtung 10 nicht nur das Objekt 14 zu identifizieren und/oder anzusteuern und/oder zu meiden, sondern auch, eine bestimmte Seite oder Oberfläche des Objekts 14 anzusteuern oder zu umfahren. So kann beispielsweise das Objekt 14 an unterschiedlichen Seiten mit demselben Objektcode aber mit unterschiedlichen Seitencodes versehen sein, was es ermöglicht, eine bestimmte Seite des Objekts 14 anzusteuern. Beispielsweise kann die Vorrichtung 10 Kenntnis davon haben, dass eine bestimmte Seite des Wegs 14 die Möglichkeit bietet, Energie, Information oder Objekte aufzunehmen oder in Empfang zu nehmen und/oder eine mechanische Kopplung mit der Vorrichtung 10 auszuführen. Es kann für die Vorrichtung 10 insofern relevant sein, eine bestimmte Seite des Objekts 14 anzufahren, was durch die Unterscheidbarkeit der Seiten mittels des Seitencodes 48 ermöglicht ist.

Werden beispielsweise Muster gemäß der Fig. 3 verwendet, so kann die Auswerteeinrichtung ausgebildet sein, um das Muster 16 auf zumindest drei Markierungsbereiche 24₁, 24₂ und 24₃ hin auszuwerten und, um die Aufnahme auf einen zwischen den Markierungsbereichen 24₁ und 24₂ angeordneten Objektcode 46 auszuwerten, die eine Identität des Objekts 14 angibt. Die Auswerteeinrichtung 22 kann ferner ausgebildet sein, um die Aufnahme auf einen zwischen den Markierungsbereichen 24₁ bis 24₃ angeordneten Oberflächencode 48 auszuwerten, der eine Identität einer Seite des Objekts 14 angibt, an welcher das Muster angeordnet ist. Es ist alternativ oder zusätzlich auch möglich, dass der Objektcode ebenfalls zwischen den Markierungsbereichen 24₁ und 24₂ angeordnet ist oder das eine sequenzielle Reihenfolge der Markierungsbereiche 24₁, 24₂ und 24₃ zu einer sequenziellen Anordnung der Musterbereiche 44₁ und 44₂ und mithin der Codes führt.

Eine Orientierung der Richtungen a und b bezüglich der Richtung x/y/z kann dabei beliebig sein. Ohne Einschränkungen kann beispielsweise das Muster 16 an dem Objekt 14 angeordnet und/oder dort rotiert sein. Aus der Lage der Markierungsbereiche 24₁, 24₂ und 24₃ kann fernerhin eine relative Lage des Objekts 14 im Raum eindeutig bestimmbar sein, beispielsweise eine Rotation um die y-Achse.

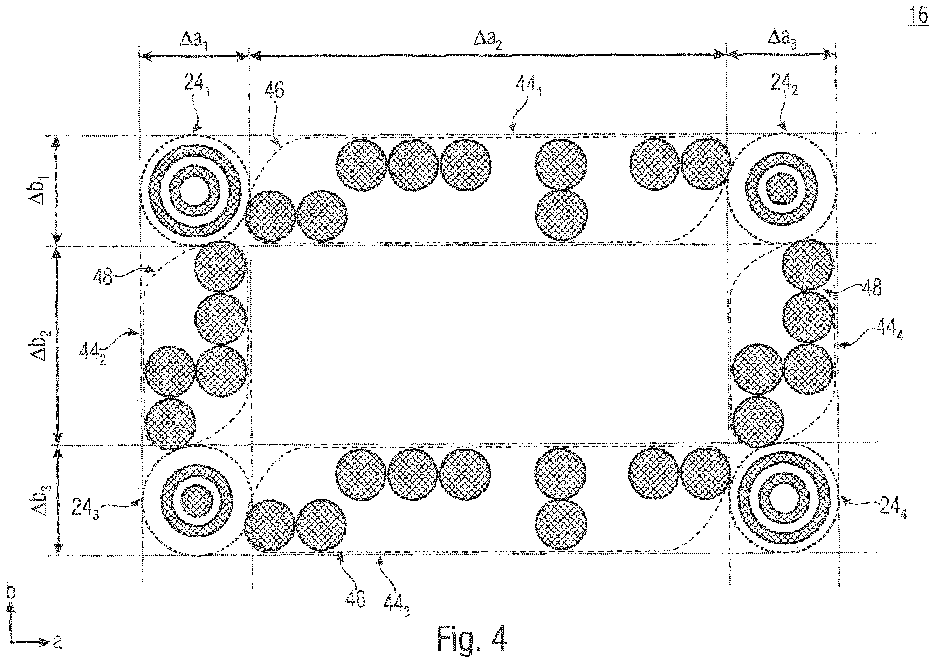

Fig. 4 zeigt eine schematische Darstellung eines Musters 16 gemäß einem Ausführungsbeispiel, das zumindest vier Musterbereiche 24₁, 24₂, 24₃ und 24₄ aufweist. Beispielsweise ist das Muster gegenüber der Darstellung in Fig. 3 um einen zusätzlichen Musterbereich, nämlich den Musterbereich 24a erweitert. Die Musterbereiche 24₁ bis 24₄ können ein Rechteck aufspannen. Bezug nehmend auf die Erläuterungen im Zusammenhang mit den Fig. 2a und 2b kann sich hier entlang beider Richtungen a und b ein hoher Informationsgrad anbieten, um die relative Lokalisierung zu bestimmen. Es kann sowohl eine Rotation um eine Achse parallel zu der a-Richtung als auch eine Rotation um ein Achse parallel zu der b-Richtung bestimmt werden. Während dies in dem Muster gemäß der Fig. 3 ebenfalls möglich ist, bietet das Muster gemäß der Fig. 4 zusätzliche Redundanz an. Die vier Kanten des Rechtecks können zumindest einen zusätzlichen Musterbereich 44₃ oder 44₄ definieren. Während das Muster gemäß der Fig. 3 beispielsweise an der dort dargestellten Hypotenuse des Dreiecks 38 auch einen Musterbereich aufweisen kann, bietet die Rechteck-Konfiguration gemäß der Fig. 4 den Vorteil, dass die Musterbereiche 24₁ und 24₃ sowie 44₂ und 44₄ untereinander vergleichbar sind.

In einander gegenüberliegenden Musterbereichen 44₁ und 44₃ sowie 44₂ und 44₄ können jeweils identische, redundante Informationen wiedergegeben werden, beispielsweise der Objektcode 46 einerseits und der Seitencode 48 andererseits. Andere Ausführungsbeispiele sehen vor, in gegenüberliegenden Musterbereichen 44₁ und 44₃ und/oder 44₂ und 44₄ voneinander verschiedene Informationen zu codieren. Eine Redundanz ermöglicht "eine Vermeidung von Fehlern, insbesondere bei erwarteten mechanischem Beeinträchtigungen des Musters 16.

Die Auswerteeinrichtung 22 kann ausgebildet sein, um das Muster 16 ähnlich einem QR-Code auszulesen. Andere Muster gemäß hierin beschriebenen Ausführungsbeispielen sehen eine andere Codierung vor, beispielsweise im Sinne eines Barcodes oder anderer graphischer Informationsdarstellungen. Dies umfasst eine entsprechende Ausgestaltung der Auswerteeinrichtung 22.

Unter erneuter Bezugnahme auf die Fig. 1 kann die Steuerungseinrichtung 38 ausgebildet sein, um eine Anweisung auszuführen, die angibt, eine vorbestimmte relative Position zu einer vorbestimmten Seite eines vorbestimmten Objekts, etwa des Objekts 14, einzunehmen. Die Steuerungseinrichtung 32 ist ausgebildet, um basierend auf der relativen Lokalisierung zu dem Objekt 14 die eigene Position durch Ansteuerung der Antriebseinrichtung 32 entsprechend der Anweisung anzupassen. So kann eine Anweisung beispielsweise darin bestehen, an die angegebene Seite des Objekts 14 heranzufahren.

Die Musterbereiche 44, in denen die Codes 46 und/oder 48 dargestellt sind, können dergestalt bestimmt werden, indem eine Verschiebung eines Markierungsbereichs 24 entlang einer der Richtungen a oder b betrachtet wird und zwar hin zu einem benachbarten Markierungsbereich. Dabei kann der Musterbereich 44 so verstanden werden, dass die durch die Verschiebung entlang der Geraden parallel zu der Richtung a oder b überstrichene Fläche in dem Muster 16, die sich gleichzeitig außerhalb der Markierungsbereiche 24 befindet, als Musterbereich bereitsteht. Wird beispielsweise eine Verschiebung des Markierungsbereichs 24, entlang der Richtung a betrachtet, so kann die Abmessung Δb₁ senkrecht hierzu beispielsweise eine Breite oder Abmessung entlang der Richtung b bestimmen, die für den Musterbereich 44 bereitsteht. Eine Länge Δa₂, über die die Verschiebung stattfindet, kann eine Abmessung des Musterbereichs 44₁ entlang der Richtung a bestimmen. Das bedeutet, entlang einer Richtung kann eine Ausdehnung des Musterbereichs durch die Länge der Verschiebung und entlang einer Richtung senkrecht hierzu durch eine entsprechende Abmessung des Markierungsbereichs bestimmt sein.

Die Auswerteeinrichtung 22 kann ausgebildet sein, um die Aufnahme ausschließlich in den Musterbereichen 44₁ bis 44₄ auf zusätzliche Informationen wie die Codes 46 und 48 zu überprüfen. Die Auswerteeinrichtung kann dabei ausgebildet sein, um einen, zwei oder mehr Musterbereiche 44 zu überprüfen. Bevorzugte Ausführungsbeispiele beziehen sich auf axiale Erstreckungen der Musterbereiche 44 entlang der Hauptrichtungen, die linear unabhängig im Raum verlaufen, wie die senkrecht zueinanderstehenden Richtungen a und b, was eine Anordnung von Codes auf der Diagonalen des Dreiecks 38 ausschließt. Gemäß diesen Ausführungsbeispielen sind unterschiedliche Musterbereiche 44 ausschließlich senkrecht oder parallel zueinander angeordnet. Dies ermöglicht eine deutliche, schnelle und robuste Lokalisierung von Codes anhand der Musterbereiche/Markierungsbereiche 44₁ bis 44₃ in Fig. 3 bzw. 24₁ bis 24₄ in Fig. 4. Innerhalb der Musterbereiche 44 können ein oder mehrere Zeilen oder Linien angeordnet sein, die codierte Information aufweisen. So kann beispielsweise der Musterbereich 44₁ eine Anzahl von zwei Linien aufweisen, wobei beispielsweise 10 Spalten einer Matrixanordnung angeordnet sind. Der Musterbereich 44₂ kann beispielsweise ebenfalls zwei Linien oder Zeilen aufweisen, wobei vier Spalten einer Matrixanordnung angeordnet sind. Die Bezeichnung Spalte und Zeile kann dabei beliebig vertauscht werden.

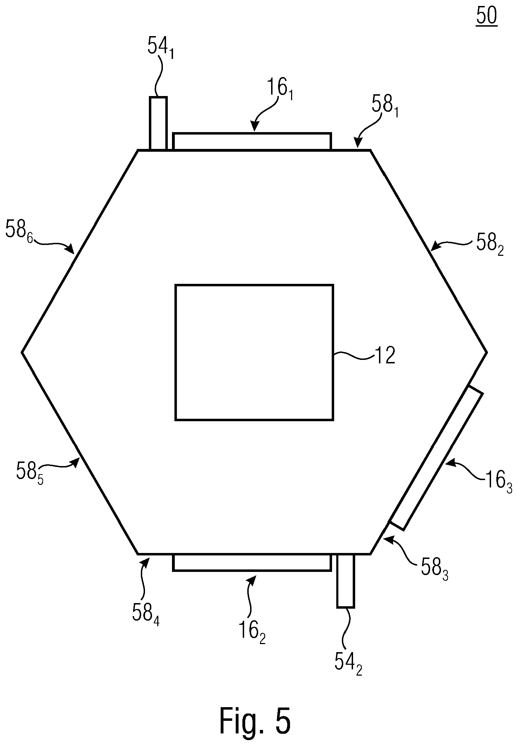

Fig. 5 zeigt eine schematische Aufsicht auf eine Vorrichtung 50 gemäß einem Ausführungsbeispiel. Die Vorrichtung 50 kann eine oder mehrere Koppeleinrichtungen 54₁ und/oder 54₂ aufweisen. Beispielsweise kann die Vorrichtung 50 ein mechanisches, magnetisches, elektromechanisches oder anders ausgestaltetes Kraftelement aufweisen, das ausgebildet ist, um eine mechanisch fixierte Verbindung mit einem korrespondierenden Gegenstück herzustellen und/oder einen mechanischen Kontakt auszuführen. Die Koppeleinrichtung 54₁ und/oder 54₂ ist somit ausgebildet, um eine mechanische Kopplung mit einer korrespondierenden mechanischen Koppeleinrichtung auszuführen, die beispielsweise an dem Objekt 14 angeordnet sein kann.

An einer, an mehreren oder an allen Seiten der Vorrichtung 50 kann ein Muster 16₁, 16₂ und/oder 16₃ angeordnet sein. Die Muster können ganz oder teilweise identisch sein, etwa unter Verwendung eines Musters gemäß der Fig. 1, 2a oder 2b. Alternativ kann das Muster objektspezifisch sein, was ebenfalls identische Muster 16₁, 16₂ und 16₃ ermöglicht, wobei sich das Muster jedoch zu anderen Vorrichtungen, beispielsweise innerhalb eines Vorrichtungsverbunds oder Schwarms unterscheiden kann. Alternativ oder zusätzlich sehen Ausführungsbeispiele jedoch vor, dass die Muster 16₁, 16₂ und 16₃ zumindest seitenindividuell sind, das bedeutet, dass unterschiedliche Seiten 58₁, 58₃ und 58₄ voneinander verschiedene Muster 16₁, 16₂ und 16₃ aufweisen, so dass anhand der Muster 16₁ bis 16₃ die Seiten voneinander unterscheidbar sind.

Die Vorrichtung 50 kann so ausgeführt sein, dass ein seitenindividuelles Muster an zumindest einer, an mehreren oder an allen Seiten 58 angebracht ist. Die Anbringung kann mittels Adhäsion oder Klebstoff erfolgen, kann aber auch einstückig mit einer Seitenwand erfolgen, etwa durch Gravieren oder sonstige Lithographie-Technik.

Die Vorrichtung 50 kann ausgebildet sein, um sich an einem entsprechenden zweidimensionalen Muster, welches an dem Objekt 14, etwa einer anderen Vorrichtung, angebracht ist, auszurichten. Unter Verwendung der mechanischen Koppeleinrichtung 54₁ oder 54₂ kann die Vorrichtung 50 mit der korrespondierenden mechanischen Koppeleinrichtung eine mechanische Verbindung aufbauen.

Für eine hohe Flexibilität der mechanischen Verbindung kann es vorteilhaft sein, die Vorrichtung 50 so auszuführen, dass ein Grundkörper der Vorrichtung 50 eine polygone Fläche aufspannt. Die polygone Fläche kann zumindest drei Seiten aufweisen und regelmäßig oder unregelmäßig gebildet sein, bevorzugt in einer Weise, die eine hohe Flächendichte beim Verbinden mit mehreren Vorrichtungen ermöglicht. Hierfür bieten sich beispielsweise regelmäßige Sechsecke oder regelmäßige Achtecke an. Vorteilhaft ist es, wenn die Vorrichtung 50 an zumindest zwei, möglicherweise gegenüberliegenden Flächen, eine mechanische Koppeleinrichtung aufweist.

Die Ausgestaltung des Grundkörpers als polygone Fläche verhindert nicht, dass ein oder mehrere Seiten durch Elemente überragt werden, etwa Räder der Antriebseinrichtung, die mechanische Koppeleinrichtung oder dergleichen. Dies ist jedoch bevorzugt so ausgestaltet, dass die mechanische Kopplung so ausgeführt werden kann, dass keine Blockade oder Behinderung durch diese Elemente erfolgt.

Gemäß Ausführungsbeispielen weist die Vorrichtung ein Muster 16 zumindest an einer Seite auf, an welcher die mechanische Koppeleinrichtung 54₁ oder 54₂ angeordnet ist. Dies ermöglicht es anderen Vorrichtungen, Seiten der Vorrichtung 50 aufzufinden, die für eine mechanische Kopplung ausgelegt sind.

Obwohl die Fig. 5 so dargestellt ist, dass sich die mechanische Koppeleinrichtung 54, benachbart zu dem Muster 16₁ und die mechanische Koppeleinrichtung 54₂ benachbart zu dem Muster 16₂ befindet, sind beliebige andere Ausgestaltungen möglich, etwa eine Position oberhalb oder unterhalb, lateral benachbart und/oder umschlossen zueinander. Beispielsweise kann die mechanische Koppeleinrichtung 54 auch in einem Zwischenbereich oder Mittenbereich des Musters 16 angeordnet sein. Dies ermöglicht eine präzise Lokalisierung der mechanischen Koppeleinrichtung anhand des Musters.

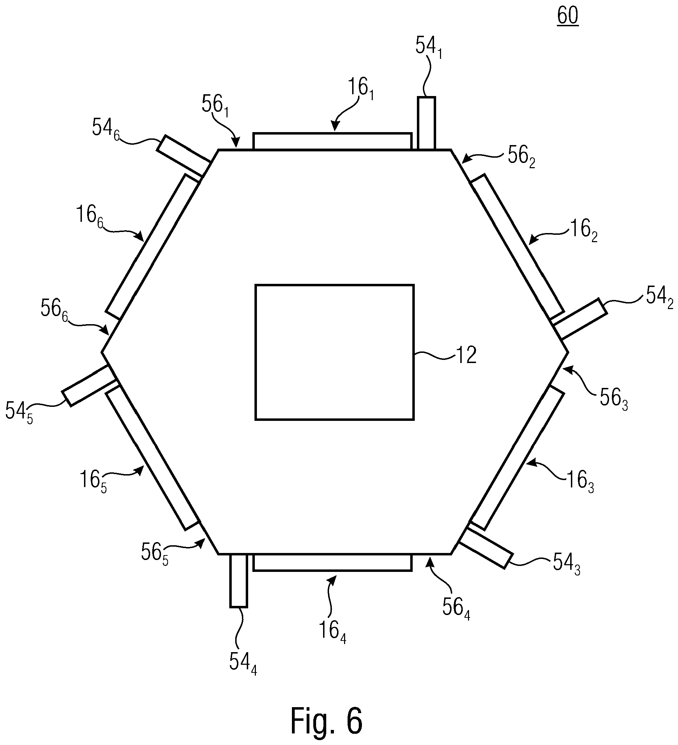

Fig. 6 zeigt eine schematische Aufsicht auf eine Vorrichtung 60 gemäß einem Ausführungsbeispiel, bei der jede der beispielhaft sechs Seiten 56₁ bis 56₆ mit einem Seiten-individuellen Muster 16₁ bis 16₆ versehen ist, beispielhaft weist jede Seite 56₁ bis 56₆ eine mechanische Koppeleinrichtung 54₁ bis 54₆ auf. Eine Anzahl von Mustern, Seiten und/oder mit einem Muster versehene Seiten bzw. mit einer Koppeleinrichtung versehene Seiten kann beliebig variiert werden.

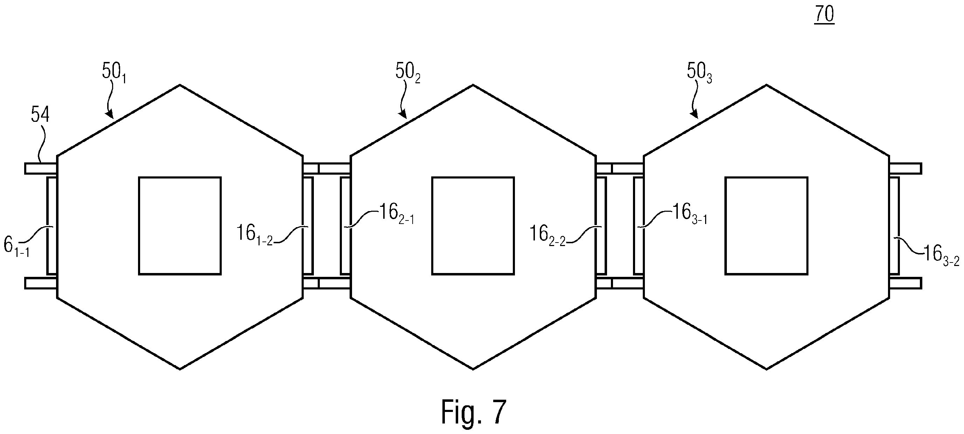

Fig. 7 zeigt eine schematische Aufsicht auf einen Vorrichtungsverbund 70 gemäß einem Ausführungsbeispiel. Der Vorrichtungsverbund 70 umfasst zumindest zwei, zumindest drei, zumindest vier oder eine höhere Anzahl, beispielsweise zumindest 10, zumindest 20 oder mehr Vorrichtungen, etwa Vorrichtungen 50, wie es durch die Bezeichnungen 50₁, 50₂ und 50₃ beispielhaft dargestellt ist. Alternativ oder zusätzlich können auch andere hierin beschriebene Vorrichtungen Teil des Vorrichtungsverbunds sein, beispielsweise die Vorrichtung 10 oder die Vorrichtung 70. Eine Anzahl der jeweiligen Vorrichtungen kann hier beliebig sein.

Wird beispielsweise die Vorrichtung 10 einfach oder mehrfach in dem Vorrichtungsverbund 70 eingesetzt, so kann diese durch Anordnung eines entsprechenden Musters bzw. Vorrichtungsmusters erweitert werden, um anderen Vorrichtungen Gelegenheit zu geben, sich an der entsprechenden Vorrichtung zu orientieren. Dadurch kann erreicht werden, dass die Mehrzahl von Vorrichtungen 50₁ bis 50₃ jeweils an zumindest einer Oberfläche ein Vorrichtungsmuster aufweist, das zumindest eine Objektseite oder eine Objektidentität angibt. Die Mehrzahl von Vorrichtungen kann ausgebildet sein, um sich untereinander relativ zueinander basierend auf der jeweiligen individuell bestimmten relativen Lokalisierung zu orientieren.

Ausführungsbeispiele sehen vor, dass die Vorrichtungen ausgebildet sind, um das Vorrichtungsmuster an ihrer Vorrichtung zu erfassen, und um basierend auf Objektcodes und/oder Oberflächencodes eine relative Lage bezüglich einer anderen Vorrichtung des Vorrichtungsverbunds oder einer Oberfläche hiervon einzunehmen.

Optional und wie es für den Vorrichtungsverbund 70 gezeigt ist, können sich zwei oder mehr, beispielsweise drei oder auch alle Vorrichtungen untereinander mechanisch koppeln, beispielsweise unter Verwendung mechanischer Koppeleinrichtungen 54.

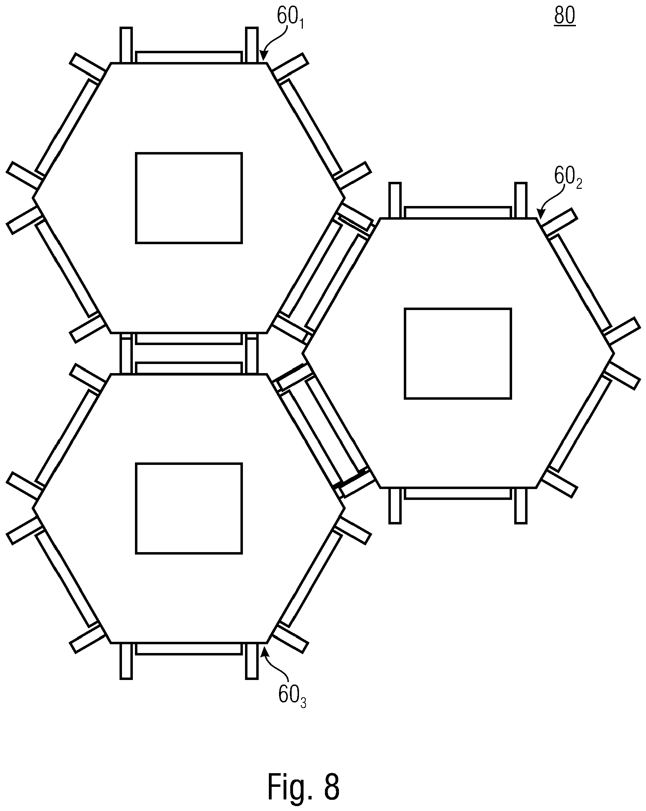

Fig.8 zeigt eine schematische Aufsicht auf einen Vorrichtungsverbund 80 gemäß einem Ausführungsbeispiel, der ebenfalls eine Mehrzahl von Vorrichtungen aufweist, beispielsweise Vorrichtungen 60₁ bis 60₃, die jeweils als Vorrichtung 60 gebildet sein können. Durch die Anordnung mechanischer Koppeleinrichtungen entlang unterschiedlicher Richtungen ist es möglich, anders als in Fig. 7, wo die mechanische Kopplung entlang einer einzelnen Richtung stattfindet, eine zweidimensionale Kopplung zu erhalten.

Ausführungsbeispiele sehen vor, dass mechanische Koppeleinrichtungen entlang dreier Raumrichtungen angeordnet sein können, um einen dreidimensionalen Verbund zu bilden.

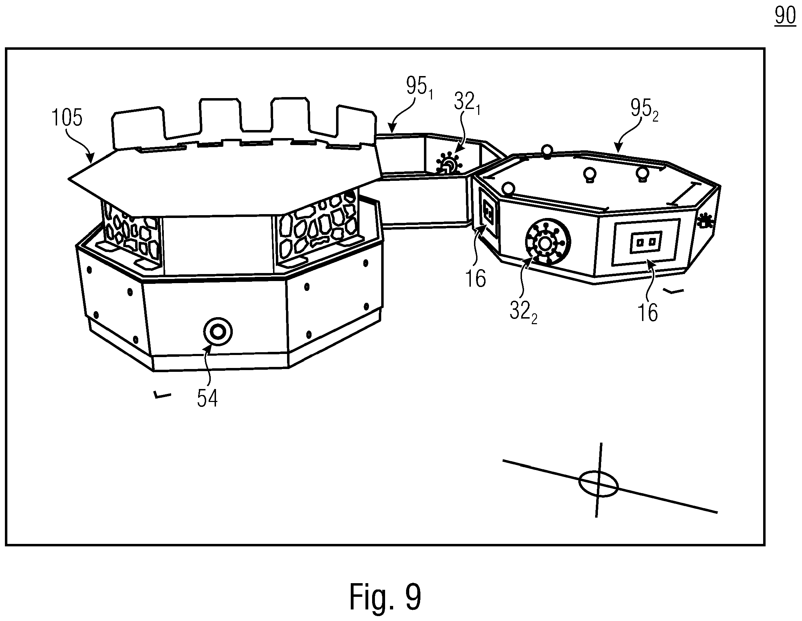

Fig. 9 zeigt eine beispielhafte perspektivische Photographie eines Vorrichtungsverbunds 90 gemäß einem Ausführungsbeispiel. Der Vorrichtungsverbund 90 umfasst beispielsweise Vorrichtungen 95₁ und 95₂, die in einem mechanisch gekoppelten Zustand dargestellt sind. Die Vorrichtungen 95₁ und 95₂ können beispielsweise in Übereinstimmung mit den Erläuterungen zu den Vorrichtungen 10, 50 und/oder 60 gebildet sein. Beispielhaft können die Vorrichtungen 95₁ und/oder 95₂ in einer Aufsicht eine achteckige Form eines Grundkörpers aufweisen.

Eine oder mehrere Seiten einer Vorrichtung 95₁ und/oder 95₂ können mit den Mustern 16 versehen sein, die optional Objektcodes und/oder Oberflächencodes bzw. Seitencodes aufweisen können.

Eine weitere Vorrichtung 105 des Vorrichtungsverbunds 90 kann mobil oder immobil sein und weist beispielsweise eine Koppeleinrichtung 54 auf. Die Vorrichtung 105 kann ausgebildet sein, um Gegenstände mit Vorrichtungen 95₁ und/oder 95₂ auszutauschen und/oder um Informationen oder Energie auszutauschen, beispielsweise anhand der Koppeleinrichtung 54.

In anderen Worten zeigt Fig. 9 ein Prototyp eines Ausführungsbeispiels. Auf Teilen der

Seitenverkleidung kann eine Codierung zur Erkennung der Vorrichtungen angebracht sein. Beispielsweise können Muster gemäß den Fig. 2a, 2b, 3 oder 4 verwendet werden. Während Fig. 3 eine nicht-redundante Variante mit einem horizontalen und einem vertikalen Code zeigt, zeigt Fig. 4 eine Ausführung mit zwei horizontalen und zwei vertikalen Codes. Es ist anzumerken, dass ein einzelner Code lediglich zwischen zwei Markern angeordnet ist, was beispielhaft über die Muster aus offenen Kreisen in den Ecken dargestellt ist, die einen Markierungsbereich bzw. einen Marker bilden. Ausführungsbeispiele sind so dargestellt, dass einmal ein horizontaler und ein vertikaler Code verwendet wird, was prinzipiell willkürlich ist. Eine längere Seite kann beispielsweise für die Erkennung von Teilnehmern verwendet werden, da möglicherweise die Anzahl von Teilnehmern größer ist als die Anzahl von Seiten eines Objekts und somit mehr Platz verfügbar ist, um mehr Information zu codieren. Eine vertikale Richtung kann beispielsweise in den Fig. 3 oder 4 für die Erkennung der Seitennummer bei den Fahrzeugen verwendet werden, beispielsweise 1 bis 6 oder 1 bis 8. Die Erkennung der Position im Raum (oder vielmehr des Abstands zu einem selbst) bzw. der Ausrichtung der Fläche mit dem Code kann bereits erreicht werden, wenn lediglich die zwei Marker eines horizontalen Codes ausgewertet werden. Bei horizontalen Markern/Codes lässt sich die Rotation des anderen Teilnehmers um die vertikale Achse messen, was für Bodenfahrzeuge interessant sein kann. Bei vertikalen Markern/Codes lässt sich die Rotation um die horizontale Achse messen. Der Abstand kann über die Größe der Marker im aufgenommenen Bild errechnet werden.

In weiter anderen Worten werden an Außenflächen der Fahrzeuge Codes in Form von BitMustern angebracht, welche zum einen jedem Fahrzeug eine eindeutige Kennung (10) zuweisen, welche von allen Seiten und Flächen identisch sein kann. Zum anderen erhält jede Fläche des Fahrzeugs eine eindeutige 10, welche getrennt von der Fahrzeug-ID erkennbar ist und über alle Fahrzeuge identisch sein kann, so dass beispielsweise gleiche Seiten unterschiedlicher Fahrzeuge gleich codiert sein können. Durch diese Trennung kann beispielsweise eine "Seite 1" von allen Fahrzeugen immer dieselbe Bitfolge erhalten, da die Zuweisung, zu welchem Fahrzeug die beobachtete Fläche gehört, über die Bitfolge der Fahrzeug-ID bestimmt werden kann. Alternativ oder zusätzlich können andere Entitäten, mit denen das Fahrzeug interagieren kann, nach demselben Prinzip zugänglich gemacht werden. So kann beispielsweise eine Aufnahme- oder Abgabestation mit einem Code versehen werden, wodurch diese dann automatisch mit erkannt wird bzw. identifizierbar ist.

Die codierten Bitfolgen können in Linien oder zweidimensionalen Bereichen angeordnet sein und zwischen zwei "Markern", Markierungsbereiche 24, angebracht werden. Bspw. zeigen die Figuren 3 und 4 eine Verwendung von jeweils zwei Bitlinien in voneinander verschiedener Spaltenzahl, wobei die Codes zueinander gedreht sein können, etwa um 90°. Die Bezeichnung in Linien, Zeilen oder Spalten dient dabei dem besseren Verständnis, kann aber beliebig vertauscht werden. Marker können einfache, schnell erkennbare und robuste Features, d. h. Merkmale, sein, welche primär dazu dienen, die Position des Codes im Bild zu erkennen, ähnlich der Marker bei QR-Codes. Das Größenverhältnis und die Position zweier benachbarter Marker können dazu verwendet werden, die Positionen der Bits zwischen den Markern zu bestimmen. Dabei können zwischen den Markern ein oder mehrere Bitlinien liegen, das bedeutet, n Bitlinien mit n ≥ 1. Es können zumindest zwei aber auch mehr Marker pro Fläche angebracht werden. Ein Optimum kann sich beispielsweise bei einer Anzahl von vier ergeben. Dadurch kann möglicherweise ein optimales Verhältnis von Markern zu Bitlinien (Musterbereiche) erreicht werden, etwa indem für vier Marker eine Anzahl von vier x n Bitlinien verwendet wird. Die Diagonalen können verwendet werden, Ausführungsbeispiele sehen jedoch vor, hierauf zu verzichten. Zudem kann die zusätzliche Information über die Ausrichtung der Fläche zur Verbesserung der Berechnung der Bitposition genutzt werden. Über eine Kanalcodierung (beispielsweise Reed-Solomon) kann ein Fehlerschutz eingefügt werden, um falsch gelesene Bits zu korrigieren. Einmal entdeckte Marker können im Bild verfolgt werden, etwa durch konsekutive Erfassung des Objekts. Hierfür kann beispielsweise ein Kalman-Filter verwendet werden. Dies ermöglicht es, zu vermeiden, dass bei zwei aufeinanderfolgenden Zeitschritten jedes Mal im gesamten Bild nach Markern gesucht werden muss.

Ausführungsbeispiele ermöglichen eine einfache und robuste Erkennung einer Orientierung von Fahrzeugen zu einander. Die Trennung zwischen Fahrzeug-ID und Seiten-ID in Kombination mit der Tatsache, dass nur im Bereich zwischen zwei Markern Information codiert ist, ermöglicht eine robuste Erkennung bei teilweiser Verdeckung der Fläche, auf welcher der Code angebracht ist. Sobald zwei Marker erkannt werden, kann die Information zwischen ihnen ausgelesen werden. Dadurch lässt sich beispielsweise die Fahrzeug-ID noch bestimmen, wenn der Teil des Codes für die Flächen-ID verdeckt ist. Durch die Unterbringung der Bits zwischen den Markern muss nicht, wie beispielsweise bei QR-Codes, der gesamte Bildbereich, der durch die Marker aufgespannt wird, transformiert werden. Es kann ausreichend sein, die Transformation auf eine Linie bzw. einer Geraden im Bild, anzuwenden, was um ein Vielfaches einfacher und schneller ist. Da durch den Code nicht nur eine Information über die Ausrichtung eines anderen Teilnehmers, sondern auch eine Abschätzung der Entfernung zu diesem möglich ist, kann das Verfahren genutzt werden, um eine Lokalisierung anderer Teilnehmer relativ zur eigenen Position zu erlangen. Bei QR-Codes (und ähnlich funktionierenden Codes) wird ein Teil der vorhandenen Bits dazu verwendet, die benötigte Bild-Transformation des Codes zu ermöglichen und zu validieren ("Synchronisierungslinie"), ein anderer Teil wird verwendet, um die Art des QR-Codes darzustellen (Anzahl verwendeter Bits, etc.). Ausführungsbeispiele sind hierauf nicht angewiesen, da der Code speziell auf das Einsatzgebiet dieser Vorrichtungen zugeschnitten ist.

Ausführungsbeispiele ermöglichen eine robuste und schnelle Erkennung von Teilnehmern oder Objekten bei mobilen Robotern, welche über eine Kamera verfügen. Insbesondere für mobile Roboter an Stationen in der Intralogistik sind solche Ausführungsbeispiele interessant, um bei einem Abnahme- oder Übergabe-Vorgang neben der bloßen Position auch Informationen über die Ausrichtung des anderen Teilnehmers relativ zur eigenen Ausrichtung zu erhalten.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (10) mit:
einer optischen Erfassungseinrichtung (12), die ausgebildet ist, um ein Objekt (14) zu erfassen, um eine Aufnahme des Objekts (14) zu erhalten;
einer Antriebseinrichtung (32), die ausgebildet ist, um die Vorrichtung anzutreiben und zu bewegen;
einer Auswerteeinrichtung (22), die ausgebildet ist, um die Aufnahme auf ein zumindest zweidimensionales Muster (16) hin auszuwerten; und um das Muster (16) bezüglich zumindest eines ersten Markierungsbereichs (24₁) und eines zweiten Markierungsbereichs (24₂) auszuwerten, um durch Vergleich des ersten Markierungsbereichs (24₁) und des zweiten Markierungsbereichs (24₂) ein Markierungsergebnis zu erhalten; und um basierend auf dem Markierungsergebnis eine relative Lokalisierung der Vorrichtung bezüglich des Objekts (14) zu ermitteln;
einer Steuerungseinrichtung (28), die ausgebildet ist, um die Antriebseinrichtung (32) basierend auf der relativen Lokalisierung zu steuern;
wobei die Antriebseinrichtung ausgebildet ist, um die Vorrichtung entlang einer Bewegungsrichtung zu bewegen; wobei die optische Erfassungseinrichtung ausgebildet ist, um das Objekt entlang oder parallel zu der Bewegungsrichtung zu erfassen; **dadurch gekennzeichnet, dass**
die Auswerteeinrichtung (22) ausgebildet ist, um das Muster (16) auf einen Objektcode (46) auszuwerten, der eine Identität des Objekts (14) angibt, und auf einen hiervon separat angeordneten Oberflächencode (48) auszuwerten, der einen bestimmten Oberflächenbereich (56) des Objekts (14) angibt, und um die relative Lokalisierung bezüglich des Objekts (14) und des Oberflächenbereichs zu ermitteln.

2. Vorrichtung gemäß Anspruch 1, bei der das Muster (16) ein zweidimensionaler QR-Code ist, der eine Mehrzahl von Markierungsbereichen (24₁-24₄) umfasst, zwischen denen entlang unterschiedlicher räumlicher Richtungen (a, b) ein Objektcode (46) zum Identifizieren des Objekts (14) und ein Oberflächencode (48) zum Identifizieren einer Oberfläche (56) des Objekts (14) angeordnet sind.

3. Vorrichtung gemäß Anspruch 1 oder 2, bei der die Auswerteeinrichtung (22) ausgebildet ist, um durch einen Größenvergleich des ersten Markierungsbereichs (24₁) und des zweiten Markierungsbereichs (24₂) eine Rotation des Objekts (14) bezüglich der Vorrichtung zu bestimmen.

4. Vorrichtung gemäß einem der vorangehenden Ansprüche, bei der die Auswerteeinrichtung (22) ausgebildet ist, um die Aufnahme ausschließlich in Bereichen (44), auf eine Anwesenheit zusätzlicher Information zu überprüfen, wobei die Auswerteeinrichtung (22) ausgebildet ist, um die Aufnahme in zumindest einem Musterbereich (44) zu überprüfen; wobei Musterbereiche (44) entlang einer linearen geraden Verschiebung eines Markierungsbereichs zu einem benachbarten Markierungsbereich aufgespannt werden; wobei eine Ausdehnung des Musterbereichs (44) entlang einer Richtung senkrecht zu der Geraden von einer Abmessung des Markierungsbereichs (24) bestimmt ist.

5. Vorrichtung gemäß einem der vorangehenden Ansprüche, bei der die Auswerteeinrichtung (22) ausgebildet ist, um durch einen Vergleich einer Größe des ersten oder zweiten Musterbereichs (24₁, 24₂) in der Aufnahme und mit einer Referenzgröße einen Objektabstand zwischen der Vorrichtung und dem Objekt (14) zu bestimmen, und um die relative Lokalisierung basierend auf dem Objektabstand zu bestimmen.

6. Vorrichtung gemäß einem der vorangehenden Ansprüche, bei der die Auswerteeinrichtung (22) ausgebildet ist, um die Aufnahme auf einen Oberflächencode (48) auszuwerten, und um basierend auf dem Oberflächencode (48) eine Oberflächenidentifizierung einer Oberfläche (56) des Objekts (14) auszuführen, wobei die Steuerungseinrichtung (28) ausgebildet ist, um die Antriebseinrichtung (32) basierend auf der Oberflächenidentifizierung zu steuern.

7. Vorrichtung gemäß einem der vorangehenden Ansprüche, bei der die Auswerteeinrichtung (22) ausgebildet ist, um die Aufnahme auf einen zwischen dem ersten und dem zweiten Markierungsbereich (24₁, 24₂) angeordneten Objektcode (46) auszuwerten, der eine Identität des Objekts (14) angibt.

8. Vorrichtung gemäß einem der vorangehenden Ansprüche, bei der die Auswerteeinrichtung (22) ausgebildet ist, um das Muster (16) auf zumindest einen dritten Markierungsbereich (24₃) hin auszuwerten; und
um die Aufnahme auf einen zwischen dem ersten und dem zweiten Markierungsbereich (24₁, 24₂) angeordneten Objektcode (46) auszuwerten, der eine Identität des Objekts (14) angibt; und
um die Aufnahme auf einen zwischen dem dritten Markierungsbereich (24₃) und dem ersten oder dem zweiten Markierungsbereich (24₁, 24₂) angeordneten Oberflächencode (48) auszuwerten, der eine Identität einer Seite (56) des Objekts (14) angibt, an welcher das Muster (16) angeordnet ist.

9. Vorrichtung gemäß einem der vorangehenden Ansprüche, bei der die Steuerungseinrichtung (28) ausgebildet ist, um eine Anweisung auszuführen, die angibt, eine vorbestimmte relative Position zu einer vorbestimmten Seite (56) eines vorbestimmten Objekts (14) einzunehmen und ausgebildet ist, um basierend auf der relativen Lokalisierung die eigene Position durch Ansteuerung der Antriebseinrichtung (32) entsprechend der Anweisung anzupassen.

10. Vorrichtung gemäß einem der vorangehenden Ansprüche, die eine Koppeleinrichtung (54) aufweist, die ausgebildet ist, um eine mechanische Koppelung mit einer korrespondierenden mechanischen Koppeleinrichtung des Objekts (14) auszuführen.

11. Vorrichtung gemäß einem der vorangehenden Ansprüche, die in einer Aufsicht eine polygone Fläche aufspannt und an zumindest zwei Flächen des Polygons eine mechanische Koppeleinrichtung (54) aufweist.

12. Vorrichtung gemäß einem der vorangehenden Ansprüche, die ein selbstfahrender Roboter ist.

13. Vorrichtungsverbund mit:
einer Mehrzahl von Vorrichtungen (10; 50; 60) gemäß einem der vorangehend beschriebenen Ansprüche;
wobei die Mehrzahl von Vorrichtungen jeweils an zumindest einer Oberfläche (56) ein Vorrichtungsmuster (16) aufweist, das zumindest eine Objektseite oder eine Objektidentität angibt;
wobei die Mehrzahl von Vorrichtungen ausgebildet ist, um sich untereinander relativ zueinander basierend auf der jeweiligen relativen Lokalisierung zu orientieren.

14. Verfahren mit:
Steuern einer Antriebseinrichtung (32), um die Vorrichtung anzutreiben und entlang einer Bewegungsrichtung in einer Bewegungsebene zu bewegen;
Steuern einer optischen Erfassungseinrichtung (12) einer Vorrichtung, um ein Objekt (14) in der oder parallel zu der Bewegungsebene zu erfassen, um eine Aufnahme des Objekts (14) zu erhalten;
Steuern einer Auswerteeinrichtung (22), um die Aufnahme auf ein zumindest zweidimensionales Muster (16) hin auszuwerten; und um das Muster (16) bezüglich zumindest eines ersten Markierungsbereichs (24₁) und eines zweiten Markierungsbereichs (24₂) auszuwerten, um durch Vergleich des ersten Markierungsbereichs (24₁) und des zweiten Markierungsbereichs (24₂) ein Markierungsergebnis zu erhalten;
und um basierend auf dem Markierungsergebnis eine relative Lokalisierung der Vorrichtung bezüglich des Objekts (14) zu ermitteln;
Steuern einer Steuerungseinrichtung (28), um die Antriebseinrichtung (32) basierend auf der relativen Lokalisierung zu steuern; **dadurch gekennzeichnet, dass** das Muster (16) auf einen Objektcode (46) ausgewertet wird, der eine Identität des Objekts (14) angibt, und auf einen hiervon separat angeordneten Oberflächencode (48) ausgewertet wird, der einen bestimmten Oberflächenbereich (56) des Objekts (14) angibt, so dass die relative Lokalisierung bezüglich des Objekts (14) und des Oberflächenbereichs ermittelt wird.

15. Computerprogramm mit einem Programmcode, der die Einrichtungen nach Anspruch 14 zur Durchführung des Verfahrens nach Anspruch 14 steuert, wenn das Programm auf einem Computer läuft.

## Claims

1. Device (10) comprising:
optical sensing means (12) configured to sense an object (14) so as to obtain a picture of the object (14);
drive means (32) configured to drive and to move the device;
evaluation means (22) configured to evaluate the picture in terms of an at least two-dimensional pattern (16), and to evaluate the pattern (16) in terms of at least a first marking area (24₁) and a second marking area (24₂) so as to obtain a marking result by comparing the first marking area (24₁) and the second marking area (24₂); and to determine, on the basis of the marking result, relative localization of the device with regard to the object (14);
control means (28) configured to control the drive means (32) on the basis of the relative localization;
wherein the drive means is configured to move the device along a direction of movement; wherein the optical sensing means is configured to sense the object along or in parallel with the direction of movement; **characterized in that**
the evaluation means (22) is configured to evaluate the pattern (16) in terms of an object code (46) indicating an identity of the object (14), and to evaluate the pattern (16) in terms of a surface code (48) which is arranged separately from the former and indicates a specific surface region (56) of the object (14), and to determine the relative localization with regard to the object (14) and to the surface region.

2. Device as claimed in claim 1, wherein the pattern (16) is a two-dimensional QR code which includes a plurality of marking areas (24₁ to 24₄) between which an object code (46) for identifying the object (14) and a surface code (48) for identifying a surface (56) of the object (14) are arranged along different spatial directions (a, b).

3. Device as claimed in claims 1 or 2, wherein the evaluation means (22) is configured to determine a rotation of the object (14) with regard to the device by means of a size comparison of the first marking area (24₁) and the second marking area (24₂).

4. Device as claimed in any of the previous claims, wherein the evaluation means (22) is configured to verify exclusively areas (44) of the picture in terms of the presence of additional information, the evaluation means (22) being configured to verify the picture in at least a pattern area (44); wherein pattern areas (44) are spanned along a linear straight-line displacement of a marking area to form an adjacent marking area; wherein an expansion of the pattern area (44) along a direction perpendicular to the straight line is determined by a dimension of the marking area (24).

5. Device as claimed in any of the previous claims, wherein the evaluation means (22) is configured to determine an object distance between the device and the object (14) by means of comparing a size of the first or second pattern areas (24₁, 24₂) in the picture to a reference size, and to determine the relative localization on the basis of the object distance.

6. Device as claimed in any of the previous claims, wherein the evaluation means (22) is configured to evaluate the picture in terms of a surface code (48) and to perform surface identification of a surface (56) of the object (14) on the basis of the surface code (48), the control means (28) being configured to control the drive means (32) on the basis of the surface identification.

7. Device as claimed in any of the previous claims, wherein the evaluation means (22) is configured to evaluate the picture in terms of an object code (46) which is arranged between the first and second marking areas (24₁, 24₂) and indicates an identity of the object (14).

8. Device as claimed in any of the previous claims, wherein the evaluation means (22) is configured to evaluate the pattern (16) in terms of at least one third marking area (24₃); and
to evaluate the picture in terms of an object code (46) which is arranged between the first and second marking areas (24₁, 24₂) and indicates an identity of the object (14); and
to evaluate the picture in terms of a surface code (48) which is arranged between the third marking area (24₃) and the first or second marking areas (24₁, 24₂) and indicates an identity of a side (56) of the object (14) on which the pattern (16) is arranged.

9. Device as claimed in any of the previous claims, wherein the control means (28) is configured to perform an instruction which indicates to take up a predetermined relative position with regard to a predetermined side (56) of a predetermined object (14), and is configured to adapt its own position by controlling the drive means (32) in accordance with the instruction, on the basis of the relative localization.

10. Device as claimed in any of the previous claims, comprising coupling means (54) configured to perform mechanical coupling to corresponding mechanical coupling means of the object (14).

11. Device as claimed in any of the previous claims, which in a top view spans a polygon surface and comprises mechanical coupling means (54) on at least two faces of the polygon.

12. Device as claimed in any of the previous claims, which is a self-driving robot.

13. Device group comprising:
a plurality of devices (10; 50; 60) as claimed in any of the claims previously described;
wherein the plurality of devices comprise, on at least one surface (56), a device pattern (16) indicating at least one object side or an object identity;
wherein the plurality of devices are configured to orient themselves, in relation to one another, on the basis of the respective relative localization.

14. Method comprising:
controlling drive means (32) to drive a device and to move it along a direction of movement within a plane of movement;
controlling optical sensing means (12) of the device to sense an object (14) within the or in parallel with the plane of movement so as to obtain a picture of the object (14);
controlling evaluation means (22) to evaluate the picture in terms of an at least two-dimensional pattern (16); and to evaluate the pattern (16) in terms of at least a first marking area (24₁) and a second marking area (24₂), to obtain a marking result by comparing the first marking area (24₁) and the second marking area (24₂); and to determine, on the basis of the marking result, relative localization of the device with regard to the object (14);
controlling control means (28) to control the drive means (32) on the basis of the relative localization; **characterized in that**
the pattern (16) is evaluated in terms of an object code (46) indicating an identity of the object (14), and the pattern (16) is evaluated in terms of a surface code (48) which is arranged separately from the former and indicates a specific surface region (56) of the object (14), so that the relative localization with regard to the object (14) and to the surface region is determined.

15. Computer program having a program code controlling the means according to claim 14 for performing the method as claimed in claim 14, when the program runs on a computer.

## Revendications

1. Dispositif (10) avec:
un moyen de détection optique (12) qui est conçu pour détecter un objet (14) pour obtenir une prise de vue de l'objet (14);
un moyen d'entraînement (32) qui est conçu pour entraîner et déplacer le dispositif;
un moyen d'évaluation (22) qui est conçu pour évaluer la prise de vue en ce qui concerne un modèle au moins bidimensionnel (16); et pour évaluer le modèle (16) en ce qui concerne au moins une première zone de marquage (24₁) et une deuxième zone de marquage (24₂) pour obtenir, en comparant la première zone de marquage (24₁) et la deuxième zone de marquage (24₂), un résultat de marquage; et pour déterminer, sur base du résultat de marquage, une localisation relative du dispositif par rapport à l'objet (14);
un moyen de commande (28) qui est conçu pour commander le moyen d'entraînement (32) sur base de la localisation relative;
dans lequel le moyen d'entraînement est conçu pour déplacer le dispositif dans une direction de déplacement; dans lequel le moyen de détection optique est conçu pour détecter l'objet dans ou parallèlement à la direction du déplacement;
**caractérisé par le fait que**
le moyen d'évaluation (22) est conçu pour évaluer le modèle (16) en ce qui concerne un code d'objet (46), qui indique une identité de l'objet (14), et en ce qui concerne un code de surface (48) disposé séparément de ce dernier, qui indique une zone de surface déterminée (56) de l'objet (14), et pour déterminer la localisation relative par rapport à l'objet (14) et à la zone de surface.

2. Dispositif selon la revendication 1, dans lequel le modèle (16) est un code QR bidimensionnel qui comporte une pluralité de zones de marquage (24₁ à 24₄) entre lesquelles sont disposés, dans différentes directions spatiales (a, b), un code d'objet (46) destiné à identifier l'objet (14) et un code de surface (48) destiné à identifier une surface (56) de l'objet (14).

3. Dispositif selon la revendication 1 ou 2, dans lequel le moyen d'évaluation (22) est conçu pour déterminer, par une comparaison de grandeur de la première zone de marquage (24₁) et de la deuxième zone de marquage (24₂), une rotation de l'objet (14) par rapport au dispositif.

4. Dispositif selon l'une des revendications précédentes, dans lequel le moyen d'évaluation (22) est conçu pour vérifier la prise de vue exclusivement dans des zones (44) en ce qui concerne la présence d'informations additionnelles, dans lequel le moyen d'évaluation (22) est conçu pour vérifier la prise de vue dans au moins une zone de modèle (44); dans lequel les zones de modèle (44) sont définies le long d'un déplacement rectiligne d'une zone de marquage vers une zone de marquage adjacente; dans lequel une extension de la zone de modèle (44) dans une direction perpendiculaire à la ligne droite est déterminée par une dimension de la zone de marquage (24).

5. Dispositif selon l'une des revendications précédentes, dans lequel le moyen d'évaluation (22) est conçu pour déterminer, par une comparaison d'une grandeur de la première ou de la deuxième zone de modèle (24₁, 24₂) dans la prise de vue et avec une grandeur de référence, une distance d'objet entre le dispositif et l'objet (14), et pour déterminer la localisation relative sur base de la distance d'objet.

6. Dispositif selon l'une des revendications précédentes, dans lequel le moyen d'évaluation (22) est conçu pour évaluer la prise de vue en ce qui concerne un code de surface (48) et pour effectuer, sur base du code de surface (48), une identification de surface d'une surface (56) de l'objet (14), dans lequel le moyen de commande (28) est conçu pour commander le moyen d'entraînement (32) sur base de l'identification de surface.

7. Dispositif selon l'une des revendications précédentes, dans lequel le moyen d'évaluation (22) est conçu pour évaluer la prise de vue en ce qui concerne un code objet (46) disposé entre la première et la deuxième zone de marquage (24₁, 24₂) qui indique une identité de l'objet (14).

8. Dispositif selon l'une des revendications précédentes, dans lequel le moyen d'évaluation (22) est conçu pour évaluer le modèle (16) en ce qui concerne au moins une troisième zone de marquage (24₃); et
pour évaluer la prise de vue en ce qui concerne un code d'objet (46) disposé entre la première et la deuxième zone de marquage (24₁, 24₂) qui indique une identité de l'objet (14); et
pour évaluer la prise de vue en ce qui concerne un code de surface (48) disposé entre la troisième zone de marquage (24₃) et la première ou la deuxième zone de marquage (24₁, 24₂) qui indique une identité d'un côté (56) de l'objet (14) sur lequel est disposé le modèle (16).

9. Dispositif selon l'une des revendications précédentes, dans lequel le moyen de commande (28) est conçu pour effectuer une instruction qui indique d'adopter une position relative prédéterminée par rapport à un côté prédéterminé (56) d'un objet prédéterminé (14) et est conçu pour adapter, sur base de la localisation relative, la propre position en commandant le moyen d'entraînement (32) selon l'instruction.

10. Dispositif selon l'une des revendications précédentes, qui présente un moyen de couplage (54) qui est conçu pour réaliser un couplage mécanique par un moyen de couplage mécanique correspondant de l'objet (14).

11. Dispositif selon l'une des revendications précédentes, qui définit, en vue de dessus, une surface polygonale et présente, sur au moins deux faces du polygone, un moyen de couplage mécanique (54).

12. Dispositif selon l'une des revendications précédentes, qui est un robot automoteur.

13. Ensemble de dispositifs avec:
une pluralité de dispositifs (10; 50; 60) selon l'une des revendications décrites ci-dessus;
dans lequel la pluralité de dispositifs présentent, chacun, sur au moins une surface (56), un modèle de dispositif (16) qui indique au moins un côté d'objet ou une identité d'objet;
dans lequel la pluralité de dispositifs sont conçus pour s'orienter entre eux l'un par rapport à l'autre sur base de la localisation relative respective.

14. Procédé comportant le fait de:
commander un moyen d'entraînement (32) destiné à entraîner et à déplacer le dispositif dans une direction de déplacement dans un plan de déplacement;
commander un moyen de détection optique (12) d'un dispositif pour détecter un objet (14) dans ou parallèlement au plan de déplacement pour obtenir une prise de vue de l'objet (14);
commander un moyen d'évaluation (22) pour évaluer la prise de vue en ce qui concerne un modèle au moins bidimensionnel (16); et pour évaluer le modèle (16) en ce qui concerne au moins une première zone de marquage (24₁) et une deuxième zone de marquage (24₂) pour obtenir, en comparant la première zone de marquage (24₁) et la deuxième zone de marquage (24₂), un résultat de marquage; et pour déterminer, sur base du résultat de marquage, une localisation relative du dispositif par rapport à l'objet (14);
commander un moyen de commande (28) pour commander le moyen d'entraînement (32) sur base de la localisation relative;
**caractérisé par le fait que** le modèle (16) est évalué en ce qui concerne un code d'objet (46) qui indique une identité de l'objet (14), et en ce qui concerne un code de surface (48), disposé séparément de ce dernier, qui indique une zone de surface déterminée (56) de l'objet (14), de sorte que soit déterminée la localisation relative par rapport à l'objet (14) et à la zone de surface.

15. Programme d'ordinateur avec un code de programme qui commande les dispositifs selon la revendication 14 pour réaliser le procédé selon la revendication 14 lorsque le programme est exécuté sur un ordinateur.
